# EUROPEAN PATENT APPLICATION

(11) **EP 4 026 724 A1**
(43) Date of publication of application: **13.07.2022**
(21) Application number: 19944281.5
(22) Date of filing: 04.09.2019
(51) Int. Cl.: B60L 53/00

(54) **AUTO-DRIVING VEHICLE SERVICE METHOD AND SYSTEM**

(71) Applicant: Beijing Tusen Zhitu Technology Co., Ltd., Beijing 101300 (CN)
(72) Inventor: WU, Nan, Beijing 101300 (CN)
(74) Representative: Murgitroyd & Company
(86) International application number: PCT/CN2019/104406
(87) International publication number: WO 2021/042295

(57) **Abstract**

An auto-driving vehicle service system. The auto-driving vehicle service system comprises a vehicle coordination device provided in an auto-driving vehicle and a hub coordination device provided in a hub service area; wherein the vehicle coordination device is used to communicate, when it is determined that the auto-driving vehicle needs a vehicle service, with the hub coordination device provided in the hub service area to determine a vehicle service solution, and control, according to the vehicle service solution, the auto-driving vehicle to interact with an entity in the hub service area; the hub coordination device is used to communicate with the vehicle coordination device to determine a vehicle service solution, and control, according to the vehicle service solution, an entity in the hub service area to interact with the auto-driving vehicle. At present, in the field of automatic driving, road infrastructure has a technological gap that it cannot provide an auto-driving vehicle with services such as energy replenishment and maintenance, and the present invention facilitates promotion and development of the application of an auto-driving technology.

## Description

### TECHNICAL FIELD

Embodiments of the present application relate to the field of intelligent traffic, in particular to a method and a system for an auto-driving vehicle service.

### BACKGROUND

This section is intended to provide a background or context to the embodiments of the present application that are recited in the claims. The description herein is not admitted to be prior art by inclusion in this section.

In recent years, logistics industry gradually develops to digital informatization and artificial intelligence, and advanced digital information technology and artificial intelligence technology not only help to improve the service quality and operation efficiency of the logistics industry, but also can effectively reduce logistics cost, thus greatly promoting the development of the logistics industry.

Highway freight is one of the main forms of logistics transportation, and with the gradual improvement of highway construction and road network structures, highway freight industry still has a large growing space in the future.

Auto-driving vehicles (ADVs) have shown a practical trend in recent years, and may be widely used in the highway freight industry due to the great reduction of labor cost and the significant improvement of transportation efficiency.

### SUMMARY

Generally, an auto-driving vehicle is an intelligent mobile device that senses road environment using an in-vehicle sensing system, plans a traveling route using a computer system, and controls a power system to operate to reach a predetermined destination. Similar to conventional vehicles, auto-driving vehicles also require services such as energy replenishment, maintenance, repairing service and the like, but current highway infrastructure cannot provide such services to auto-driving vehicles.

In view of the above problem, the present application provides a method and a system for an auto-driving vehicle service that overcome, or at least partially solve the above problem.

In a first aspect of the embodiments of the present application, provided is a method for an auto-driving vehicle service applied to a vehicle coordination device, the vehicle coordination device is configured in the auto-driving vehicle, and the method comprises: communicating, by the vehicle coordination device, with a hub coordination device to determine a vehicle service scheme in response to determining that the auto-driving vehicle needs a vehicle service, wherein the hub coordination device is configured in a hub service district; and controlling the auto-driving vehicle to interact with an entity in the hub service district by the vehicle coordination device according to the vehicle service scheme.

In a second aspect of the embodiments of the present application, provided is a method for an auto-driving vehicle service applied to a hub coordination device, the hub coordination device is configured in a hub service district, and the method comprises: communicating, by the hub coordination device, with a vehicle coordination device configured in the auto-driving vehicle needing a vehicle service to determine a vehicle service scheme; and controlling an entity in the hub service district to interact with the auto-driving vehicle by the hub coordination device according to the vehicle service scheme.

In a third aspect of the embodiments of the present application, provided is a vehicle coordination device comprising: a processor, a memory and a computer program stored on the memory and executable on the processor, wherein the processor, when executing the computer program, executes the aforementioned method for an auto-driving vehicle service applied to the vehicle coordination device.

In a fourth aspect of embodiments of the present application, provided is an auto-driving vehicle comprising a vehicle coordination device; the vehicle coordination device is configured for communicating with a hub coordination device configured in a hub service district to determine a vehicle service scheme when determining that the auto-driving vehicle needs a vehicle service, and controlling the auto-driving vehicle to interact with an entity in the hub service district according to the vehicle service scheme.

In a fifth aspect of embodiments of the present application, provided is a computer-readable storage medium having a computer program stored thereon, wherein the computer program, when executed by a processor, implements the aforementioned method for an auto-driving vehicle service applied to a vehicle coordination device.

In a sixth aspect of embodiments of the present application, provided is a hub coordination device comprising: a processor, a memory and a computer program stored on the memory and executable on the processor, wherein the processor, when executing the computer program, executes the aforementioned method for an auto-driving vehicle service applied to the hub coordination device.

In a seventh aspect of embodiments of the present application, provided is a hub service district comprising a hub coordination device and an entity; the hub coordination device is configured for communicating with a vehicle coordination device configured in an auto-driving vehicle to determine a vehicle service scheme, and controlling the entity in the hub service district to interact with the auto-driving vehicle according to the vehicle service scheme.

In an eighth aspect of embodiments of the present application, provided is a computer-readable storage medium having a computer program stored thereon, wherein the computer program, when executed by a processor, implements the aforementioned method for an auto-driving vehicle service applied to a hub coordination device.

In a ninth aspect of embodiments of the present application, provided is a system for an auto-driving vehicle service comprising: a vehicle coordination device configured in an auto-driving vehicle and a hub coordination device configured in a hub service district; wherein the vehicle coordination device is configured for communicating with the hub coordination device configured in the hub service district to determine a vehicle service scheme when determining that the auto-driving vehicle needs a vehicle service, and controlling the auto-driving vehicle to interact with an entity in the hub service district according to the vehicle service scheme; and the hub coordination device is configured for communicating with the vehicle coordination device to determine a vehicle service scheme, and controlling the entity in the hub service district to interact with the auto-driving vehicle according to the vehicle service scheme.

In a tenth aspect of the embodiments of the present application, provided is a vehicle service system comprising: an auto-driving vehicle and a hub service district; the auto-driving vehicle comprises a vehicle coordination device; the hub service district comprises a hub coordination device and an entity; the vehicle coordination device communicates with the hub coordination device to determine a vehicle service scheme when the auto-driving vehicle needs a vehicle service; the vehicle coordination device controls the auto-driving vehicle to interact with the entity in the hub service district according to the vehicle service scheme; and the hub coordination device controls the entity in the hub service district to interact with the auto-driving vehicle according to the vehicle service scheme.

The present application provides a method and a system for determining a vehicle service scheme according to the demand of an auto-driving vehicle and providing a vehicle service for the auto-driving vehicle by a hub service district, which makes up for the technical blank that highway infrastructure cannot provide services such as energy replenishment, maintenance and the like for the auto-driving vehicle in the field of autonomous driving at present, and is favorable for popularizing and developing the application of auto-driving technology.

Additional features and advantages of the present application will be described in the following specification, and partially will be obvious from the specification, or may be comprehended by the present application. The objectives and other advantages of the present application may be realized and attained by the structure particularly pointed out in the written specification, claims and drawings.

The technical solution of the present application is further described in detail with reference to the drawings and embodiments.

### BRIEF DESCRIPTION OF THE DRAWINGS

The above and other objects, features and advantages of exemplary embodiments of the present application will be easily understood by reading the following detailed description with reference to the drawings. In the drawings, several embodiments of the present application are illustrated by way of example and not limitation, wherein
FIG. 1 schematically shows a system structure of an auto-driving vehicle according to an embodiment of the present application;
FIG. 2 schematically shows a schematic plan view of a hub service district according to an embodiment of the present application;
FIG. 3 schematically shows a system structure diagram of a hub service district according to an embodiment of the present application;
FIG. 4 schematically shows a scene diagram of a vehicle service system according to an embodiment of the present application;
FIG. 5 schematically shows a scene diagram of a system for an auto-driving vehicle service according to an embodiment of the present application;
FIG. 6 schematically shows a traveling route map of an auto-driving vehicle according to an embodiment of the present application;
FIG. 7 schematically shows a traveling route map of an auto-driving vehicle according to an embodiment of the present application;
FIG. 8 schematically shows an auto-driving vehicle according to an embodiment of the present application; and
FIG. 9 schematically shows a hub service district according to an embodiment of the present application.

In the drawings, the same or corresponding reference numerals refer to the same or corresponding parts.

### DETAILED DESCRIPTION

The principles and spirit of the present application will be described below with reference to several exemplary embodiments. It should be understood that these embodiments are given only to enable those skilled in the art to better understand and to implement the present application, and do not limit the scope of the present application in any way. Rather, these embodiments are provided to make the present disclosure more thorough and complete, and will fully convey the scope of the present disclosure to those skilled in the art.

It should be appreciated by those skilled in the art that embodiments of the present application may be implemented as a system, an apparatus, a device, a method, or a computer program product. Accordingly, the present disclosure may be specifically implemented in the form of: only hardware, only software (including firmware, resident software, microcode, and the like), or a combination of hardware and software.

To facilitate understanding, technical terms related to the present application are explained as follows:
The terminal referred to in the present application may include, but is not limited to, a mobile phone, a tablet computer, a desktop computer, a portable notebook computer, and the like.

The term "and/or" used in the present application is merely an associative relationship describing associated objects, and refers to that there may be three relationships, for example, A and/or B, may refers to that: A is present alone, A and B are present simultaneously, and B is present alone.

The character "/"in the present invention generally indicates an "or" relationship between the associated objects.

Any number of elements in the drawings is for illustration and not limitation, and any designation is for distinction only and does not have any limiting meaning.

The principles and spirit of the present application are explained in detail below with reference to several representative embodiments of the present application.

### 1. Auto-driving vehicle (ADV)

The auto-driving vehicle may be a vehicle which is realized by using an auto-driving technology and has a manned function (such as a family car and a bus), a goods carrying function (such as a common truck, a van truck, a swap trailer, a closed truck, a tank truck, a flat truck, a container van truck, a dump truck, and a truck with a special structure) or a special rescue function (such as a fire engine and an ambulance).

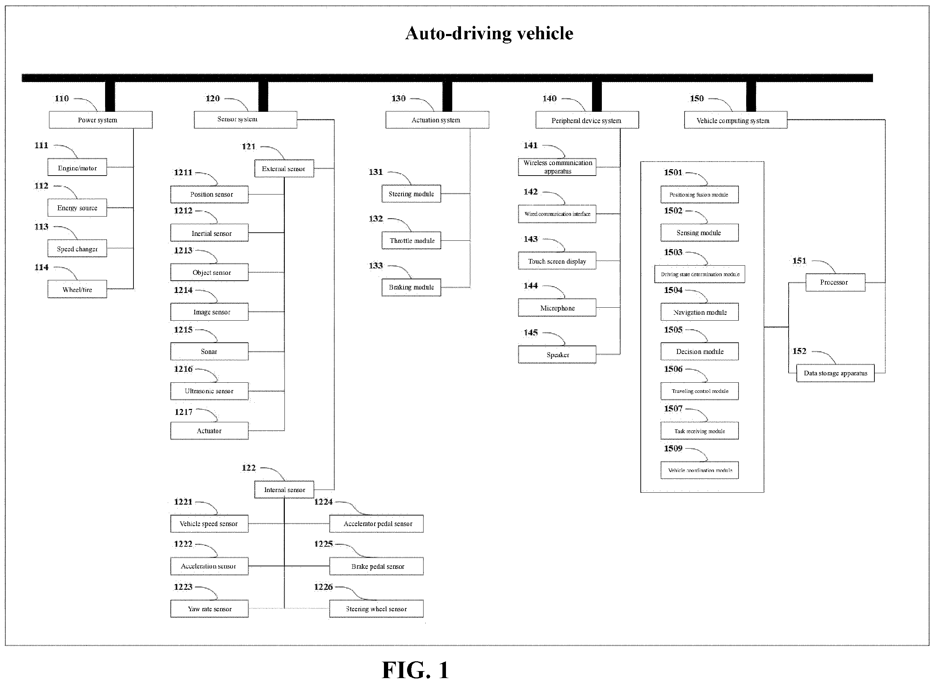

FIG. 1 shows a system structure of an auto-driving vehicle according to an embodiment of the present application. The auto-driving vehicle comprises a power system 110, a sensor system 120, an actuation system 130, a peripheral device system 140, and a vehicle computing system 150. In other embodiments, the vehicle may comprise more, fewer, or different units, and each unit may comprise more, fewer, or different components. In other embodiments, the units and components shown in FIG. 1 may be combined or divided in any number.

The power system 110 may be configured to provide motion power for the vehicle. The power system 110 comprises one or more of an engine/motor 111, an energy source 112, a speed changer 113, and wheels/tires 114.

The engine/motor 111 may be any combination of an internal combustion engine, an electric motor, a steam engine, and a Stirling engine, as well as other motors and engines. In some embodiments, the power system 110 may include multiple types of engines and/or motors. For example, a gas-electric hybrid vehicle may comprise a gasoline engine and an electric motor.

The energy source 112 may be an energy source 112 that wholly or partially powers the engine/motor 111. The engine/motor 111 may be configured to convert the energy source 112 into mechanical energy. The energy source 112 may include gasoline, diesel, propane, other compressed gas-based fuels, ethanol, solar panels, batteries, and other sources of electrical power. The energy source 112 may additionally or alternatively include any combination of a fuel tank, a battery, a capacitor and/or a flywheel. In some embodiments, the energy source 112 may also provide energy to other units of the vehicle.

The speed changer 113 may be configured to transmit the mechanical power from the engine/motor 111 to the wheels/tires 114. To this end, the speed changer 113 may include a gearbox, a clutch, a differential, a drive shaft, and/or other elements. In an embodiment where the speed changer 113 includes a drive shaft, the drive shaft may include one or more axles configured to couple to the wheels/tires 114.

The wheels/tires 114 may be configured in any form including single wheel/tire, dual wheel/tire, three wheel/tire, four wheel/tire, six wheel/tire forms, and the like. Other wheel/tire 114 forms are possible, such as eight or more wheel/tire forms. Under any circumstances, the wheels/tires 114 may be configured to rotate differentially relative to other wheels/tires 114. In some embodiments, the wheels/tires 114 may include at least one wheel fixedly attached to the speed changer 113 and at least one tire contacted with a road surface and coupled to a rim of the vehicle. The wheels/tires 114 may comprise any combination of metal and rubber, or a combination of other materials.

The power system 110 may additionally or alternatively comprise other components in addition to the aforementioned components.

The sensor system 120 may include external sensors 121 and internal sensors 122.

The external sensors 121 may include a plurality of sensors configured to sense information about the environment where the vehicle is located, and one or more actuators 1217 configured to modify positions and/or orientations of the sensors. For example, the external sensors 121 may include one or more of a position sensor 1211, an inertial sensor 1212, an object sensor 1213, and an image sensor 1214.

The position sensor 1211 may be any sensor that estimates a geographic position of the vehicle, e.g., a positioning device for a global positioning system (GPS), a positioning device for a real time kinematic (RTK), a positioning device for a Beidou satellite positioning system, a positioning device for a GLONASS positioning system, a positioning device for a Galileo positioning system, and a positioning device for a global navigation satellite system (GNSS). The position sensor 1211 may include a transceiver that estimates a position of the vehicle relative to the earth.

The inertial sensor 1212 may be any combination of sensors configured to sense position and direction changes of the vehicle from inertial acceleration, such as an inertial measurement unit (IMU). In some embodiments, the inertial sensor 1212 may include an accelerometer and a gyroscope.

The object sensor 1213 may be any sensor that uses radio or laser signals to sense objects in the environment where the vehicle is located, such as a radar, a laser rangefinder, and a lidar. In some embodiments, the radar and lidar may also additionally sense the speed and/or direction of travel of objects in addition to sensing the presence of objects. In some embodiments, the object sensor 1213 may include an emitter that emits a radio signal or a laser signal and a detector that detects the radio signal or the laser signal.

The image sensor 1214 may include any camera (such as still camera and video camera) for capturing images of the environment where the vehicle is located.

In addition, the external sensors 121 may also include other sensors, such as any sensor for detecting the distance of objects, e.g., a sonar 1215 and an ultrasonic sensor 1216.

The internal sensors 122 may include a plurality of sensors configured to detect information corresponding to the traveling state of the vehicle. For example, the internal sensors 122 may include one or more of a vehicle speed sensor 1221, an acceleration sensor 1222, and a yaw rate sensor 1223.

The vehicle speed sensor 1221 may be any sensor that detects the speed of the vehicle.

The acceleration sensor 1222 may be any sensor that detects the acceleration of the vehicle.

The yaw rate sensor 1223 may be any sensor that detects the yaw rate (rotational angular velocity) of the vehicle about the vertical axis of the center of gravity, e.g., a gyroscope sensor.

In some embodiments, in order to detect driving operation information, the internal sensors 122 may also include one or more of an accelerator pedal sensor 1224, a brake pedal sensor 1225, and a steering wheel sensor 1226.

The accelerator pedal sensor 1224 may be any sensor that detects the amount of depression of an accelerator pedal, and the accelerator pedal sensor 1224 is provided, for example, at a shaft portion of the accelerator pedal of the vehicle.

The brake pedal sensor 1225 may be any sensor that detects the amount of depression of a brake pedal, and the brake pedal sensor 1225 is provided, for example, at a shaft portion of the brake pedal. The brake pedal sensor 1225 may also detect an operating force (a depression force on the brake pedal, a pressure of a master cylinder, and the like) of the brake pedal.

The steering wheel sensor 1226 may be any sensor that detects a rotation state of a steering wheel, the detection values of the rotation state are such as a steering torque or a steering angle, and the steering wheel sensor 1226 is provided, for example, at a steering shaft of the vehicle.

In addition, the internal sensors 122 may also include other sensors, such as a sensor that monitors various components (such as an oxygen monitor, a fuel gauge, and an engine oil thermometer) within the vehicle.

In some examples, the sensor system 120 may be implemented as a plurality of sensor combinations, and each is configured to be mounted on a respective position (e.g., top, bottom, front side, rear side, left side, and right side) of the vehicle.

The actuation system 130 may be configured to control the driving behavior of the vehicle. The actuation system 130 may comprise one or more of a steering module 131, a throttle module 132, and a braking module 133.

The steering module 131 may be any combination of devices that controls the steering torque of the vehicle.

The throttle module 132 may be any combination of devices that controls the operating speed of the engine/motor 111 and the speed of the vehicle by adjusting the amount of air supplied to the engine (throttle opening).

The braking module 133 may be any combination of devices that decelerates the vehicle, for example, the braking module 133 may use friction to decelerate the wheels/tires 114.

The peripheral device system 140 may be configured to enable the vehicle to interact with external sensors 121, other vehicles, external computing devices, and/or users. For example, the peripheral device system 140 may include one or more of a wireless communication apparatus 141, a wired communication interface 142, a touch screen display 143, a microphone 144, and a speaker 145.

The wireless communication apparatus 141 may be configured to directly or wirelessly connect to one or more of the devices comprised in the power system 110, the sensor system 120, the actuation system 130, the peripheral device system 140, and the vehicle computing system 150, as well as directly or wirelessly connect to one or more of the other vehicles, central control systems, and entities in a hub service district. The wireless communication apparatus 141 may include an antenna and a chipset for communication based on wireless communication technology, wherein the wireless communication technology may include Global System for Mobile (GSM) Communications, General Packet Radio Service (GPRS), Code Division Multiple Access (CDMA), Wideband Code Division Multiple Access (WCDMA), Time-Division Code Division Multiple Access (TD-SCDMA), Long Term Evolution (LTE), Blue Tooth (BT), Global Navigation Satellite System (GNSS), Frequency Modulation (FM), Near Field Communication (NFC), and Infrared (IR) technologies. GNSS may include Global Positioning System (GPS), Global Navigation Satellite System (GLONASS), Beidou Navigation Satellite System (BDS), Quasi-zenith Satellite System (QZSS), and/or Satellite Based Augmentation System (SBAS).

The wired communication interface 142 may be configured to directly connect to one or more of the devices comprised in the power system 110, the sensor system 120, the actuation system 130, the peripheral device system 140, and the vehicle computing system 150, as well as directly connect to one or more of the other vehicles, central control systems, and entities in a hub service district. The wired communication interface 142 may include an Inter-Integrated Circuit (I2C) Interface, an Inter- Integrated Circuit Sound (I2S) Interface, a Pulse Code Modulation (PCM) Interface, a Universal Asynchronous Receiver/Transmitter (UART) Interface, a Mobile Industry Processor Interface (MIPI), a General-Purpose Input/Output (GPIO) Interface, a Subscriber Identity Module (SIM) Interface, and/or a Universal Serial Bus (USB) Interface, and the like.

The touch screen display 143 may be used by a user to input commands to the vehicle. The touch screen display 143 may be configured to sense positions and/or movements of the positions of the user's finger by capacitive sensing, resistive sensing, or surface acoustic wave processing. The touch screen display 143 is capable of sensing finger movements in a direction parallel or coplanar to a touch screen surface, a direction perpendicular to the touch screen surface, or both directions, and is also capable of sensing the level of the pressure applied to the touch screen surface. The touch screen display 143 may be formed of one or more translucent or transparent insulating layers and one or more translucent or transparent conductive layers. The touch screen display 143 may also be configured in other forms.

The microphone 144 may be configured for receiving acoustic signals (e.g., voice commands or other audio inputs) and converting the acoustic signals into electrical signals.

The speaker 145 may be configured to output audio.

The peripheral device system 140 may further or alternatively comprises other components.

The vehicle computing system 150 may comprise a processor 151 and a data storage apparatus 152.

The processor 151 may be configured for executing instructions stored in the data storage apparatus 152 to perform various functions including, but not limited to, functions corresponding to a positioning fusion module 1501, a perception module 1502, a traveling state determination module 1503, a navigation module 1504, a decision module 1505, a traveling control module 1506, and a task receiving module 1507 as described below. The processor 151 may include a combination of one or more of a general-purpose processor (e.g., a CPU and a GPU), a special-purpose processor (e.g., an application-specific integrated circuit (ASIC)), a field programmable gate array (FPGA), a digital signal processor (DSP), an integrated circuit, a microcontroller, and the like. In the case where the processor 151 includes a plurality of processors 151, these processors 151 can operate individually or in combination.

The data storage apparatus 152 may include one or more volatile computer-readable storage media and/or one or more non-volatile computer-readable storage media, such as optical, magnetic, and/or organic storage media. The data storage apparatus 152 may include a combination of one or more of a read-only memory (ROM), a random access memory (RAM), a flash memory, an electrically programmable read-only memory (EPROM), an electrically erasable programmable read-only memory (EEPROM), an embedded multi-media card (eMMC), a hard-disk drive, or any volatile or non-volatile media. The data storage apparatus 152 may be integrated in whole or in part with the processor 151. The data storage apparatus 152 may be configured to store instructions executed by the processor 151 to perform various functions including, but not limited to, functions corresponding to the positioning fusion module 1501, the perception module 1502, the traveling state determination module 1503, the navigation module 1504, the decision module 1505, the traveling control module 1506, and the task receiving module 1507 as described below.

The positioning fusion module 1501 may be configured to receive environmental data, position data, or other types of data sensed by the sensor system 120, and perform timestamp alignment, fusion calculation, and other processing on the data to obtain the fused environmental data and vehicle position data. The positioning fusion module 1501 may include, for example, kalman filters, bayesian networks, and other algorithms implementing other functions.

The perception module 1502 may be configured to receive the fused environmental data computed by the positioning fusion module 1501 and perform computer vision processing thereon to identify objects and/or features in the environment where the vehicle is located, and the objects and/or features include, for example, lane lines, pedestrians, other vehicles, traffic signals, infrastructure, and the like. The perception module 1502 may use object identification algorithm, Structure from Motion (SfM) algorithm, video tracking, or other computer vision technologies. In some embodiments, the perception module 1502 may be further configured to map an environment, track objects, estimate a speed of an object, and the like.

The traveling state determination module 1503 identifies the traveling state of the vehicle, including, e.g., vehicle speed, acceleration, or yaw rate, based on the data obtained by the internal sensors 122 in the sensor system 120.

The task receiving module 1507 may be configured to receive a task, parse information such as loading/unloading addresses, types of goods and loading/unloading times comprised in the task, and transmit all the information to the navigation module 1504.

The navigation module 1504 may be configured to determine any unit of a driving path of a vehicle. The navigation module 1504 may be further configured to dynamically update the driving path as the vehicle is operated. In some embodiments, the navigation module 1504 may be configured to determine a traveling path for the vehicle based on the processing results from the positioning fusion module 1501, the position sensor, the object sensor 1213, the task receiving module 1507, and one or more pre-stored high precision map data.

The decision module 1505 may be configured to generate route point information for the vehicle based on the traveling path calculated by the navigation module 1504, the vehicle position data calculated by the positioning fusion module 1501, and the objects and/or features in the environment where the vehicle identified by the perception module 1502 is located, and route points in the route point information are track points along which the vehicle heads in the traveling path.

The traveling control module 1506 may be configured to receive the route point information generated by the decision module 1505 and control the actuation system 130 based on the route point information such that the vehicle travels in accordance with the route point information.

The data storage apparatus 152 may also be configured to store other instructions, including instructions to send data to, receive data from, interact with, and/or control one or more of the power system 110, the sensor system 120, the actuation system 130, and/or the peripheral device system 140. The data storage apparatus 152 may also be configured to store other instructions. For example, the data storage apparatus 152 may store instructions for controlling the operation of the speed changer 113 to improve fuel efficiency, may store instructions for controlling the image sensor 1214 to capture an image of the environment, may store instructions for generating a three-dimensional image of the environment where the vehicle is located according to the data sensed by the object sensor 1213, and may store instructions for identifying the electrical signals converted by the microphone 144 to voice commands.

The data storage apparatus 152 may also be configured to store other instructions. In addition to storing instructions, the data storage apparatus 152 may also be configured to store a variety of information, such as image processing parameters, training data, high-precision maps and path information. All the information may be used by one or more of the power system 110, the sensor system 120, the actuation system 130, the peripheral device system 140, and the vehicle computing system 150 during operation of the vehicle in an autonomous mode, a semi-autonomous mode and/or a manual mode.

The vehicle computing system 150 may be communicatively connected to one or more of the power system 110, the sensor system 120, the actuation system 130, and the peripheral device system 140 by a system bus, a network, and/or other connection mechanisms.

The vehicle computing system 150 may be directly connected to the wireless communication apparatus 141 in the peripheral device system 140 by a data line or wirelessly connected thereto by the wireless communication technology, and then wirelessly connected to the hub service district and/or a central control system by the wireless communication apparatus 141.

The vehicle computing system 150 may also be a plurality of computing apparatuses that distributively control individual components or individual systems of the vehicle.

The vehicle computing system 150 may additionally or alternatively comprise other components.

The vehicle computing system 150 may include a vehicle coordination device ADV-ECU, which may comprise one or more first processors, one or more first memories, and computer instructions stored on the first memory and executable on the first processor. The first processor, when executing computer instructions in the first memory, performs the corresponding functions of the vehicle coordination module 1509 as described below. The vehicle coordination module 1509 may be configured to communicate with the hub coordination module 255 in the hub service district to determine a vehicle service scheme and to control the auto-driving vehicle to interact with the entities in the hub service district according to the vehicle service scheme. Among them, the first processor may be configured as one or more general-purpose processors (e.g., a CPU and a GPU), one or more special-purpose processors (e.g., an ASIC), one or more field programmable gate arrays (FPGAs), one or more digital signal processors (DSPs), one or more integrated circuits, and/or one or more microcontrollers and the like in the processor 151. The first memory may be configured as one or more read-only memories (ROMs), one or more random access memories (RAMs), one or more flash memories, one or more electrically programmable memories (EPROMs), one or more electrically erasable programmable read-only memories (EEPROMs), one or more embedded multi-media cards (eMMCs), and/or one or more hard-disk drives, and the like in the data storage apparatus 152. The vehicle coordination module 1509 may be implemented as a computer program product that, when executed on a computer, implements a method for an auto-driving vehicle service that communicates with the hub coordination module 255 in the hub service district to determine a vehicle service scheme and controls the auto-driving vehicle to interact with the entities in the hub service district according to the vehicle service scheme.

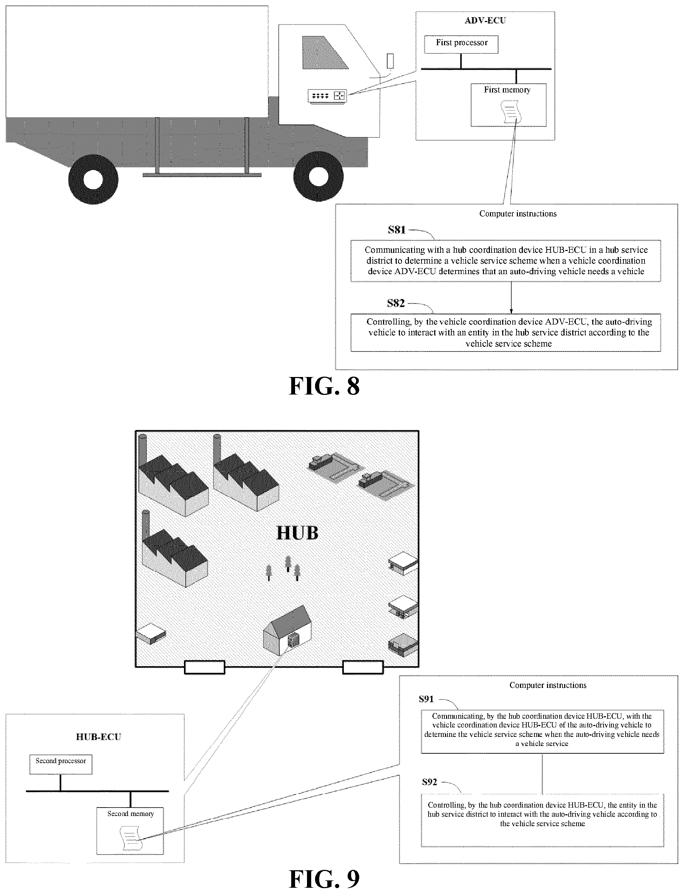

FIG. 8 shows an auto-driving vehicle according to an embodiment of the present application is configured with a vehicle coordination device ADV-ECU comprising a first processor, a first memory, and computer instructions stored on the first memory and executable on the first processor. When the first processor is executing the computer instructions in the first memory, the method corresponding to the following steps is executed: S81, communicating with the hub coordination device HUB-ECU configured in a hub service district to determine a vehicle service scheme in response to that the vehicle coordination device ADV-ECU determines that the auto-driving vehicle needs a vehicle service; and S82, controlling the auto-driving vehicle to interact with an entity in the hub service district by the vehicle coordination device ADV-ECU according to the vehicle service scheme.

### 2. Hub service district (HUB)

The hub service district may be a location having functions of providing one or more vehicle service items for the auto-driving vehicle, such as energy replenishment, vehicle repairing service, vehicle maintenance, vehicle cleaning, loading, unloading, goods warehousing, procedure upgrading, parking, weighing, and payment. The hub service district may also have other functions, such as providing one or more of industrial manufacturing, rail transportation, air transportation, expressway area rest services, and the like. For example, the hub service district may be a highway port, a coastal port, a freight distribution center, a logistics park, an industrial park, a warehouse, a train station, an airport, an expressway service district, a fuel filling station, a gas filling station, and the like.

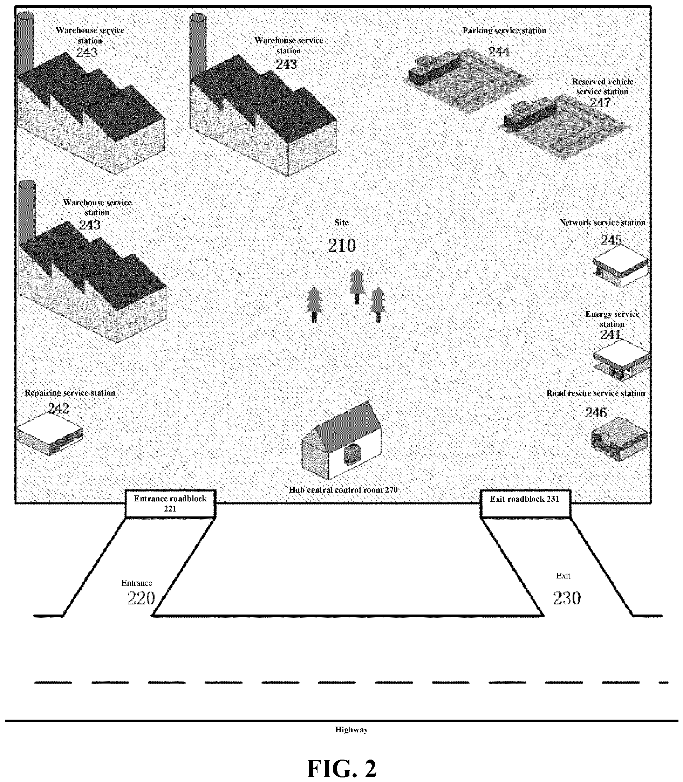

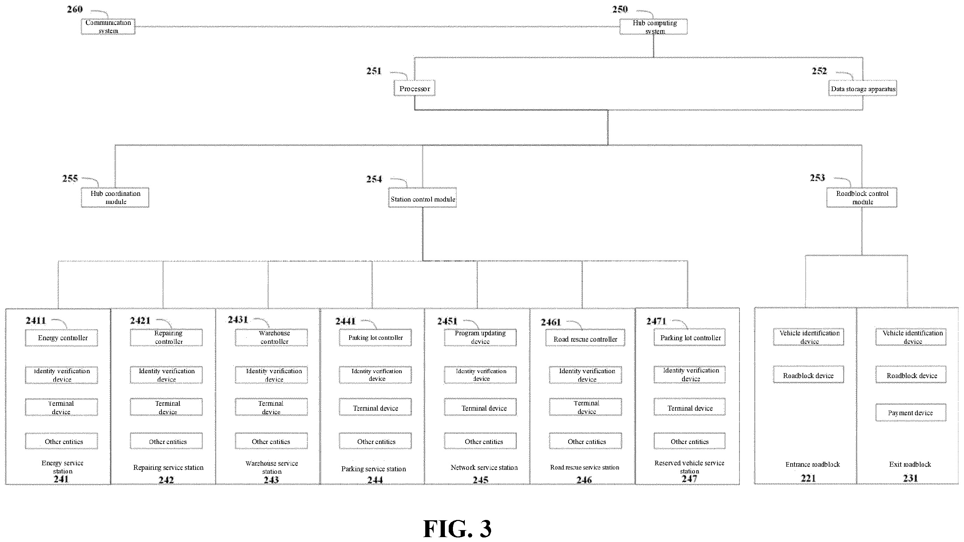

FIG. 2 is a schematic plan view of a hub service district according to the present embodiment, and FIG. 3 is a system structure diagram of the hub service district. As shown in FIG. 2, the hub service district may be configured to comprise a site 210, an entrance 220, an exit 230, one or more service stations and a hub central control room 270.

The site 210 is the ground and space area on the ground occupied by the whole hub service district. The site 210 may be divided into a service area and a road area. The service area is configured for setting up service stations. The road area is configured for a vehicle traveling in the site 210.

The entrance 220 is configured for the vehicle entering the site 210. The entrance 220 may be provided with an entrance roadblock 221 for allowing or denying the vehicles to enter the site 210. The entrance roadblock 221 may be configured to comprise a vehicle identification device and a roadblock device. The vehicle identification device may include any device for detecting the vehicle approaching the entrance 220 and identifying the identity of the vehicle, and may include, for example, one or more of a vehicle detector, a camera, and a card reader. The roadblock device may be one or more of an electric telescopic door, an electric sliding door, and an electric road gate.

The exit 230 is configured for vehicles exiting the site 210. The exit 230 may be provided with an exit roadblock 231 for allowing or denying the vehicles to exit the site 210. The exit roadblock 231 may be configured to comprise a vehicle identification device, a payment device, and a roadblock device. The vehicle identification device may include any device for detecting the vehicle approaching the exit 230 and identifying the identity of the vehicle, and may include, for example, one or more of a vehicle detector, a camera, and a card reader. The roadblock device may be one or more of an electric telescopic door, an electric sliding door, and an electric road gate. The payment device may be configured for collecting total fees paid by the auto-driving vehicle for all vehicle services provided in the hub service district. The payment device may be configured to be connected with an electronic bank through a network and used for receiving payment of the vehicle through a network transfer mode.

As shown in FIG. 2, each service station is disposed in a service area, and may include, but is not limited to, one or more of an energy service station 241, a repairing service station 242, a warehouse service station 243, a parking service station 244, a network service station 245, a road rescue service station 246, a reserved vehicle service station 247, and the like.

As shown in FIGs. 2 and 3, the hub central control room 270 is located in the service area, and a central computing system 250 and a communication system 260 may be located in the hub central control room 270.

The energy service station 241 may be configured to provide vehicle service items related to energy replenishment for the vehicle, including, but not limited to, fuel filling, gas filling, charging, power battery pack replacement and the like.

The energy service station 241 may include any entity (including the area occupied by the service station and one or more of ground facilities, machineries, and operators within the area) for providing the service item of energy replenishment for the vehicle. The energy service station 241 may include one or more of entities such as a fuel dispenser, a gas dispenser, an alternating current (AC) charging pile, a direct current (DC) charging pile, an AC/DC integrated charging pile, a battery swapping station, a fire-fighting device, an energy controller 2411, an operator, a terminal device, an identity verification device, and a monitoring device.

The fuel dispenser is a device that may replenish the vehicle with liquid fuel. The fuel dispenser may be used to replenish the vehicle with gasoline, diesel fuel, or other types of liquid fuels for the vehicle. In one embodiment, the fuel dispenser may include one or more of a tank, a fuel pipeline, a submerged pump, a fuel and gas recovery system, a flow meter, an electromagnetic valve, a fuel gun, and the like.

The gas dispenser is a device that may replenish the vehicle with gaseous fuel. The gas dispenser may be used to replenish the vehicle with Liquefied Petroleum Gas (LPG), Compressed Natural Gas (CNG), Liquefied Natural Gas (LNG), or other types of automotive gaseous fuels. The gas dispenser may include one or more of a mass flow meter, a pressure sensor, an electronic control system, an explosion-proof control power source, a pneumatic valve, a ball valve, a stop valve, a safety valve, a metal hose, a gas gun, a gas return gun, a gas pipeline, and the like.

The AC charging pile is a power supply apparatus which may supply an AC power source to an in-vehicle charger of an electric vehicle. The AC charging pile may be a floor-standing or wall-mounted charging pile, and may also be a charging pile in a "one pile, one vehicle" form (one charging pile can only charge one vehicle) or in a "one pile, multiple vehicles" form (one charging pile can charge multiple vehicles).

The DC charging pile is a power supply apparatus which may convert an AC power from a grid into a DC power and supply the DC power to an electric vehicle. The DC charging pile may be a floor-standing or wall-mounted charging pile, and may also be a charging pile in a "one pile, one vehicle" form (one charging pile can only charge one vehicle) or in a "one pile, multiple vehicles" form (one charging pile can charge multiple vehicles).

The AC/DC integrated charging pile is a power supply apparatus which may supply an AC power source and a DC power source for an electric vehicle. The AC/DC integrated charging pile may be a floor-standing or wall-mounted charging pile, and may also be a charging pile in a "one pile, one vehicle" form (one charging pile can only charge one vehicle) or in a "one pile, multiple vehicles" form (one charging pile can charge multiple vehicles).

The battery swapping station may be used for quickly swap a power battery pack of an electric vehicle. In one embodiment, the battery swapping station may comprise a plurality of power battery packs and a storage room dedicated to storing the power battery packs. In another embodiment, the battery swapping station may also comprise one or more of a DC charging pile, an AC charging pile, an AC/DC integrated charging pile for charging the swapped power battery packs.

The fire-fighting device may be any device used for fire protection, explosion protection, lightning protection, and static protection. For example, the fire-fighting device may include one or more of a fire extinguisher (dry powder and/or carbon dioxide extinguisher), a fire blanket, fire sand, a fire water system, a lightning protector, a lightning strip, a lightning-protection net, an electrostatic discharge, a fire emergency light, an explosion-proof flashlight, an electrostatic grounding alarm, a combustible gas detection alarm, a smoke alarm, a liquid level alarm, a pressure alarm, and the like.

The energy controller 2411 may be configured to connect with, receive data from, interact with, and/or control one or more of a fuel dispenser, a gas dispenser, an AC charging pile, a DC charging pile, an AC/DC integrated charging pile, a battery swapping station, a fire-fighting device, and a terminal device. The energy controller 2411 may be configured to receive commands sent by the station control module 252 in the hub computing system 250 and to control one or more entities in the energy service station 241 to perform actions according to the received commands. For example, the energy controller 2411 may control the fuel dispenser to fill an appropriate amount of fuel to the auto-driving vehicle and control the gas dispenser to fill an appropriate amount of gas to the auto-driving vehicle according to the commands sent by the station control module 252. The energy controller 2411 may be configured to send data obtained from one or more of a fuel dispenser, a gas dispenser, an AC charging pile, a DC charging pile, an AC/DC integrated charging pile, a battery swapping station, a fire-fighting device, and a terminal device to the station control module 252 in the hub computing system 250. The energy controller 2411 may comprise a processor and a data storage apparatus. The processor may be configured for executing instructions stored in the data storage apparatus to perform various functions including, but not limited to, the functions described above corresponding to the energy controller 2411. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, the functions described above corresponding to the energy controller 2411.

The energy service station 241 may additionally or alternatively comprise other entities in addition to the aforementioned entities.

The repairing service station 242 may be configured for providing vehicle service items related to vehicle fault detection, vehicle repairing, vehicle maintenance, and the like, including but not limited to vehicle service items such as sensor calibration, vehicle fault diagnosis, maintenance and cleaning, sheet metal paint baking, mechanical fault repairing, replacement of vehicle parts, tire repairing, electronic component detection and repairing, and the like.

The repairing service station 242 may include any entity (including the area occupied by the service station and one or more of ground facilities, machineries, and operators within the area) for providing the service items of detection, repairing, maintenance, and the like for the vehicle. In one embodiment, the repairing service station 242 may include one or more of entities such as a sensor calibration device, a vehicle diagnosis device, a detection and analysis device, a maintenance and cleaning device, a sheet metal paint baking device, a maintenance supply, a manual repairing tools, a tire repairing device, a vehicle lifting device, a repairing controller 2421,a tools for electronic component detection and repairing, a vehicle accessory, an electronic component, an operators, a terminal device, an identity verification device, and a monitoring device.

The sensor calibration device may include one or more of a planar target (e.g., checkerboard, ArUco code), a solid target, and a corner reflector for calibrating a position sensor 1211, an inertial sensor 1212, an object sensor 1213, and an image sensor 1214 of the auto-driving vehicle.

The vehicle diagnosis device may include one or more of a vehicle decoder, a vehicle fault code reading card, a special-purpose computer thereof and the like.

The detection and analysis device may include one or more of a vehicle speedometer tester, a wheel weight tester, a vehicle brake tester, a light detector, a vehicle side slip tester, a sound level meter, an exhaust gas detection instrument, a fuel consumption instrument, a rotation angle instrument, a chassis dynamometer, an engine analyzer, a centering instrument, a road tester, an environment-friendly dynamometer, a waste analyzer and the like.

The maintenance and cleaning device may include one or more of an automatic gearbox cleaning fuel changing machine, a power steering fuel changing machine, a butter filling machine, a refrigerant recovery filling machine, a fuel nozzle cleaning detection device, a polishing machine, a waxing machine, a dust suction machine, a water suction machine and the like.

The sheet metal paint baking device may include one or more of a baking paint room, a baking paint lamp, a paint mixing room, a crossbeam corrector, an earth-eight diagram, a spray gun and the like.

The maintenance supply may include one or more of refinish paint, refrigerant, brake fluid, antifreeze, lubricating oil, repairing agent, glass water, sealant, poly-putty base, rust inhibitor, water tank treasure, car wax, car glaze, coolant, cleaner for vehicles and motorcycles, tire polish, adhesive for vehicle, and the like.

The manual service tool may include one or more of a wrench, a screwdriver, a set, a tool cart, a tool box, a bench, and the like.

The tire repairing device may include one or more of a balancing machine, a tire changer, a nitrogen charger, a tire repairing machine, and the like.

The vehicle lifting device may include one or more of a two-column lift, a four-column lift, a scissor lift, a mobile lift, a jack, a hoisting machine, a crane, and the like.

The automotive accessory may include engine accessories, drive train accessories, brake train accessories, steering train accessories, running train accessories, and the like. The engine accessories include, but are not limited to, throttle bodies, engines, engine assemblies, fuel pumps, fuel nozzles, tensioner wheels, cylinder blocks, bearing bushes, water pumps, fuel jets, gaskets, camshafts, valves, crankshafts, link assemblies, pistons, belts, mufflers, carburetors, fuel tanks, water tanks, fans, oil seals, radiators, filters, and the like. The drive train accessories include, but are not limited to, speed changers, gear shift lever assemblies, reducers, clutches, pneumatics, power tools, magnetic materials, electronic components, clutch discs, clutch covers, universal joints, ball transfer units, universal balls, ball cages, clutch discs, transfer cases, power take-offs, synchronizers, synchronizer rings, synchronous belts, differentials, differential housings, differential disc angle teeth, planetary gears, wheel carriers, flanges, gearboxes, countershafts, gears, shift lever shifters, propeller shaft assemblies, propeller shaft flanges, belts, and the like. The brake train accessories include, but are not limited to, brake shoes, brake pads, brake disks, brake drums, compressors, brake assemblies, brake pedal assemblies, brake master cylinders, brake cylinders, vehicle anti-lock brake system electronic control units (ABS-ECUs), electric hydraulic pumps, brake cam shafts, brake rollers, brake tellurium pins, brake adjusting arms, brake chambers, vacuum boosters, hand brake assemblies, parking brake assemblies, parking brake lever assemblies, and the like. The steering train accessories include, but are not limited to, steering gears, knuckle heads, knuckle steering wheels, steering gears, assembly boosters, steering tie rods, power pumps, and the like. The running train accessories include, but are not limited to, rear axles, air suspension systems, balance blocks, steel plates, tires, steel plate springs, half shafts, shock absorbers, steel ring assemblies, half shaft bolts, axle housings, frames, assemblies, wheel stands, front axles, and the like.

The tool for electronic component detection and repairing may include display and storage particle testers, oscilloscopes, programmers, test cards, data acquisition cards, chip mounters, ultraviolet erasers, tin furnaces, mainboard slots, diagnostic cards, digital multimeters, memory testers, ultrasonic cleaners, and the like.

The electronic component may include liquid crystal screens, touch screens, mainboard IO interfaces, power source chips, field effect transistors, capacitors, and the like.

The repairing controller 2421 may be configured to connect with, receive data from, interact with, and/or control one or more of a vehicle diagnosis device, a detection and analysis device, a maintenance and cleaning device, a sheet metal paint baking device, a tire repairing device, a vehicle lifting device, and a terminal device. The repairing controller 2421 may be configured to receive commands sent by the station control module 252 in the hub computing system 250 and to control one or more entities in the repairing service station 242 to perform actions according to the received commands. For example, the repairing controller 2421 may control a vehicle diagnostic device to diagnose a fault with an auto-driving vehicle based on commands sent by the station control module 252. The repairing controller 2421 may be configured to send data obtained from one or more of the vehicle diagnosis device, the detection and analysis device, the maintenance and cleaning device, the sheet metal paint baking device, the tire repairing device, the vehicle lifting device, and the terminal device to the station control module 252 in hub computing system 250. The repairing controller 2421 may comprise a processor and a data storage apparatus. The processor may be configured for executing instructions stored in the data storage apparatus to perform various functions including, but not limited to, the functions described above corresponding to the repairing controller 2421. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, the functions described above corresponding to the repairing controller 2421.

The repairing service station 242 may additionally or alternatively comprise other entities in addition to the aforementioned entities.

The warehouse service station 243 may be configured to provide vehicle service items related to loading and unloading of goods for the vehicle. The warehouse service station 243 may include any entity (including the area occupied by the service station and one or more of ground facilities, machineries, and operators within the area) capable of providing loading and unloading service for the vehicle. The warehouse service station 243 may include one or more of entities such as a warehouse, a dock, a forklift, a crane, a transfer robot, a loading and unloading platform, a warehouse controller 2431, an operator, a terminal device, an identity verification device, and a monitoring device.

The warehouse is configured for storing goods. The warehouse may be divided into different spaces according to the goods type (e.g., foods, medicines, cold storage goods, and inflammables). Sensors such as video cameras, infrared cameras, radars, temperature sensors and humidity sensors may be arranged in the warehouse.

The dock is configured as a road connected with the warehouse for docking the vehicles awaiting loading and unloading. The number and size of the docks may be determined based on one or more of the size of the warehouse, the number of spaces into which the warehouse is divided, the number of the vehicles, the size of the vehicles, the time required to load and unload by each vehicle, and the like. The dock may be configured to provide a floor scale sensor for weighing the vehicle.

The crane is configured for loading or unloading containers transported by the vehicle.

The forklift and transfer robot are configured for transferring goods stored in the warehouse to the vehicle, or transferring goods transported by the vehicle to the warehouse.

The loading and unloading platform is configured so as to overlap between the vehicle and the dock, and serves as a platform for the forklift and the transfer robot to travel between the dock and the vehicle. The loading and unloading platform may adopt a fixed loading and unloading platform of a hydraulic system, one end of the fixed loading and unloading platform is contacted with the dock, and the other end thereof may be adjusted in height to be lapped on the vehicle.

The warehouse service station 243 may be configured to call up a reserved vehicle in the reserved vehicle service station 247 to load the goods to be transported at the dock.

The warehouse controller 2431 may be configured to connect with, receive data from, interact with, and/or control one or more of sensors disposed in a warehouse, sensors disposed in a dock, a forklift, a crane, a transfer robot, a loading and unloading platform, and a terminal device. The warehouse controller 2431 may be configured to receive commands sent by the station control module 252 in the hub computing system 250 and to control one or more entities in the warehouse service station 243 to perform actions according to the received commands. For example, the warehouse controller 2431 may control the loading and unloading platform to adjust to an appropriate height based on commands sent by the station control module 252. The warehouse controller 2431 may be configured to send data obtained from one or more of sensors disposed in a warehouse, sensors disposed in a dock, a forklift, a crane, a transfer robot, a loading and unloading platform, and a terminal device to the station control module 252 in hub computing system 250. The warehouse controller 2431 may comprise a processor and a data storage apparatus. The processor may be configured for executing instructions stored in the data storage apparatus to perform various functions including, but not limited to, the functions described above corresponding to the warehouse controller 2431. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, the functions described above corresponding to the warehouse controller 2431.

The warehouse service station 243 may additionally or alternatively comprise other entities in addition to the aforementioned entities.

The parking service station 244 may be configured to provide vehicle service items related to parking for the vehicle. The parking service station 244 may include any entity (including the area occupied by the service station and one or more of ground facilities, machineries, and operators within the area) for providing the parking service item for the vehicle. The parking service station 244 may include one or more of entities such as a parking lot, a vehicle identification device, a barrier gate, a toll collection device, a remaining parking space display device, a parking lot controller 2441, an operator, a terminal device, an identity verification device, and a monitoring device.

The parking lot is configured for parking vehicles. The parking lot may comprise an exit 230, an entrance 220, and a plurality of parking spaces. The parking space may be one or more of a planar parking space and a mechanical parking space. The parking space may be configured to comprise one or more of a wheel aligner, a camera, an ultrasonic parking space probe.

The vehicle identification device may include any device for detecting the vehicle approaching the parking lot entrance 220 and identifying the identity of the vehicle, and may include, for example, one or more of a vehicle detector, a camera, and a card reader. The vehicle detector may be a ground-sensing vehicle detector.

The barrier gate is configured for permitting or denying the vehicle to enter or exit the parking lot. The barrier gate may include one or more of a barrier rod, a barrier rod support, a transmission mechanism, a balancing apparatus, a motor, a reduction gearbox, and the like.

The toll collection device may be configured to perform identification, recording, accounting, toll collection, and the like for the vehicle entering and exiting the parking lot. The toll collection device may be configured to include one or more of a card reader, a computing apparatus, and a memory. The card reader writer may be a contact card reader, a medium-range card reader, or a long-range card reader. The toll collection device may also be configured to be connected with an electronic bank through a network and used for receiving payment of the vehicle through a network transfer mode.

The remaining parking space display device is configured to display a parking space that is free in the parking lot. The remaining parking space display device may be configured to determine whether the parking space is free from the result of detection by the ultrasonic parking space detector in the parking space or the image taken by the camera.

The parking lot controller 2441 may be configured to connect with, receive data from, interact with, and/or control one or more of a vehicle identification device, a barrier gate, atoll collection device, a remaining parking space display device, and a terminal device. The parking lot controller 2441 may be configured to receive commands sent by the station control module 252 in the hub computing system 250 and to control one or more entities in the parking service station 244 to perform actions according to the received commands. For example, the parking lot controller 2441 may control the barrier gate to be opened or closed according to commands sent by the station control module 252, or be configured to control the toll collection device to update the toll standard. The parking lot controller 2441 may be configured to send data obtained from one or more of a vehicle identification device, a barrier gate, a toll collection device, a remaining parking space display device, and a terminal device to the station control module 252 in the hub computing system 250. The parking lot controller 2441 may comprise a processor and a data storage apparatus. The processor may be configured to execute instructions stored in the data storage apparatus to perform various functions including, but not limited to, the functions described above corresponding to the parking lot controller 2441. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, the functions described above corresponding to the parking lot controller 2441.

The parking service station 244 may additionally or alternatively comprise other entities in addition to the aforementioned entities.

The network service station 245 may be configured to provide vehicle service items related to updating an electronic file for the vehicle, wherein the electronic file may include software programs, map files, and the like. The network service station 245 may include any entity (including the area occupied by the service station and one or more of ground facilities, machineries, and operators within the area) for providing service items related to updating an electronic file and the like for the vehicle. The network service station 245 may include one or more of entities such as a program updating device 2451, a network connection device, an operator, a terminal device, an identity verification device, and a monitoring device.

The program updating device 2451 may comprise a processor and a data storage apparatus. The processor may be configured to execute instructions stored in the data storage apparatus to perform various functions including, but not limited to, functions corresponding to a checking module, a searching module, a comparison module, and an updating module as described below. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, functions corresponding to the checking module, the searching module, the comparison module, and the updating module as described below. The checking module may be configured to check and determine versions of various electronic files in the vehicle; the searching module may be configured to search for the latest version of various electronic files in a network; the comparison module may be configured to compare versions of various electronic files in the vehicle with corresponding latest version to determine which electronic files in the vehicle need to be updated; and the updating module may be configured to download the latest version of the electronic file from a network to update the electronic file needing to be updated. The program updating device 2451 may include some interfaces such as an I2C interface, an I2S interface, a PCM interface, a UART interface, a MIPI interface, a GPIO interface, a SIM interface, and/or a USB interface. One or more of the interfaces described above may be used to communicatively connect an auto-driving vehicle with the program updating device.

The network connection device may include a network interface, and a network interface controller. The network interface may include, but is not limited to, one or more of an RJ-45 interface, an RJ-11 interface, an SC fiber interface, an FDDI interface, an AUI interface, a BNC interface, a Console interface, a USB interface, an RS-232 interface, and the like. The network interface controller may connect a device connected to the network interface (e.g., an auto-driving vehicle) to the network.

The network service station 245 may additionally or alternatively comprise other entities in addition to the aforementioned entities.

The road rescue service station 246 may be configured to provide vehicle service items related to rescue at the failed on-site road (road outside of the hub service district) for the failed vehicle, and may include, for example, one or more vehicle service items such as on-site fuel filling, on-site gas filling, on-site charging, on-site power battery pack replacement, towing, on-site mechanical fault repairing, on-site vehicle part replacement, on-site tractor replacement, on-site trailer replacement, goods transfer, personnel transfer, road evacuation, and wounded rescue. The road rescue service station 246 may include any entity (including the area occupied by the service station and one or more of ground facilities, machineries, and operators within the area) for providing on-site rescue services for the vehicle that has failed on roadways outside of a hub service district. The road rescue service station 246 may include one or more of entities such as a mobile repairing vehicle, a mobile energy vehicle, a trailer, reserved vehicle parts, a road evacuation device, an ambulance, a road rescue controller 2461, an operator, a terminal device, an identity verification device, and a monitoring device.

The mobile repairing vehicle may be configured as a vehicle having vehicle repairing tools and/or devices for providing mechanical fault repairing services for the vehicle that has failed on a road.

The mobile energy vehicle may be configured as a vehicle capable of supplying liquid fuel for vehicles, gas fuel for vehicles, a charging power source, a replaceable power battery pack, and the like, for providing services such as replenishing liquid fuel and gas fuel, providing a charging power source, and replacing a power battery pack for the vehicle that has failed on a road.

The trailer is used for a service of towing the vehicle that has failed on a road to a suitable area (e.g., a hub service district).

The reserved vehicle parts may include, but are not limited to, engine accessories, drive train accessories, brake train accessories, steering train accessories, running train accessories, sensor accessories, and the like. The engine accessories include, but are not limited to, throttle bodies, engines, engine assemblies, fuel pumps, fuel nozzles, tensioner wheels, cylinder blocks, bearing bushes, water pumps, fuel jets, gaskets, camshafts, valves, crankshafts, link assemblies, pistons, belts, mufflers, carburetors, fuel tanks, water tanks, fans, oil seals, radiators, filters, and the like. The drive train accessories include, but are not limited to, speed changers, gear shift lever assemblies, reducers, clutches, pneumatics, power tools, magnetic materials, electronic components, clutch discs, clutch covers, universal joints, ball transfer units, universal balls, ball cages, clutch discs, transfer cases, power take-offs, synchronizers, synchronizer rings, synchronous belts, differentials, differential housings, differential disc angle teeth, planetary gears, wheel carriers, flanges, gearboxes, countershafts, gears, shift lever shifters, propeller shaft assemblies, propeller shaft flanges, belts, and the like. The brake train accessories include, but are not limited to, brake shoes, brake pads, brake disks, brake drums, compressors, brake assemblies, brake pedal assemblies, brake master cylinders, brake cylinders, ABS-ECUs, electric hydraulic pumps, brake cam shafts, brake rollers, brake tellurium pins, brake adjusting arms, brake chambers, vacuum boosters, hand brake assemblies, parking brake assemblies, parking brake lever assemblies, and the like. The steering train accessories include, but are not limited to, steering gears, knuckle heads, knuckle steering wheels, steering gears, assembly boosters, steering tie rods, power pumps, and the like. The running train accessories include, but are not limited to, rear axles, air suspension systems, balance blocks, steel plates, tires, steel plate springs, half shafts, shock absorbers, steel ring assemblies, half shaft bolts, axle housings, frames, assemblies, wheel stands, front axles, and the like. The sensor accessories include, but are not limited to, cameras, lidars, ultrasonic radars, laser rangefinders, brackets, pan-tilts, and the like.

The road evacuation device may include, but are not limited to, a road cone, a road block, and the like.

The ambulance may comprise a vehicle, a stretcher bed, a wheelchair, a breathing aid, an oxygen cylinder, a blood pressure monitor, medication or intravenous (IV) bags, a warning light, a buzzer, a radio walkie talkie, a satellite positioning device, and the like for carrying injured personnel from a site to a hospital.

The road rescue service station 246 may be configured to call up a reserved vehicle in the reserved vehicle service station 247 to arrive at a rescue scene, and then perform tasks such as personnel transfer and goods transfer.

The road rescue controller 2461 may be configured to be connected with, receive data from, interact with, and/or control one or more of a mobile repairing vehicle, a mobile energy vehicle, a trailer, an ambulance, and a terminal device. The road rescue controller 2461 may be configured to receive commands sent by the station control module 252 in the hub computing system 250 and to control one or more entities in the road rescue service station 246 to perform actions according to the received commands. For example, the road rescue controller 2461 may dispatch an appropriate entity to the rescue scene to provide vehicle service items for the auto-driving vehicle based on commands sent by the station control module 252. The road rescue controller 2461 may be configured to send data obtained from one or more of a mobile repairing vehicle, a mobile energy vehicle, a trailer, an ambulance, and a terminal device to the station control module 252 in the hub computing system 250. The road rescue controller 2461 may comprise a processor and a data storage apparatus. The processor may be configured for executing instructions stored in the data storage apparatus to perform various functions including, but not limited to, the functions described above corresponding to the road rescue controller 2461. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, the functions described above corresponding to the road rescue controller 2461.

The road rescue service station 246 may additionally or alternatively comprise other entities in addition to the aforementioned entities.

The reserved vehicle service station 247 may be configured to provide a reserved vehicle, such as a passenger vehicle, a commercial vehicle, a tractor, and a trailer. The reserved vehicle service station 247 may include one or more of entities such as a parking lot, a vehicle identification device, a barrier gate, a remaining parking space display device, a parking lot controller 2471, a reserved vehicle, an operator, a terminal device, an identity verification device, and a monitoring device.

The parking lot is configured for parking a reserved vehicle. The parking lot may comprise an exit, an entrance, and a plurality of parking spaces. The parking space may be one or more of a planar parking space and a mechanical parking space. The parking space may be configured to comprise one or more of a wheel aligner, a camera, an ultrasonic parking space probe. The parking lot in the reserved vehicle service station 247 and the parking lot in the parking service station 244 may be configured as the same parking lot.

The vehicle identification device may include any device for detecting the vehicle approaching the parking lot entrance and identifying the identity of the vehicle. The vehicle identification device may include one or more of a vehicle detector, a camera, and a card reader. When the parking lot in the reserved vehicle service station 247 and the parking lot in the parking service station 244 are configured as the same parking lot, the vehicle identification device in the reserved vehicle service station 247 and the vehicle identification device in the parking service station 244 are configured as the same device.

The barrier gate is disposed at an entrance and an exit of the parking lot for permitting or denying the vehicle to enter or exit the parking lot. The barrier gate may include one or more of a barrier rod, a barrier rod support, a transmission mechanism, a balancing apparatus, a motor, a reduction gearbox, and the like. When the parking lot in the reserved vehicle service station 247 and the parking lot in the parking service station 244 are configured as the same parking lot, the barrier gate in the reserved vehicle service station 247 and the barrier gate in the parking service station 244 are configured as the same device.

The remaining parking space display device is configured to display a parking space that is free in the parking lot. The remaining parking space display device may be configured to determine whether the parking space is free from the result of detection by the ultrasonic parking space detector in the parking space or the image taken by the camera. When the parking lot in the reserved vehicle service station 247 and the parking lot in the parking service station 244 are configured as the same parking lot, the remaining parking space display device in the reserved vehicle service station 247 and the remaining parking space display device in the parking service station 244 are configured as the same device.

The parking lot controller 2471 may be configured to connect with, receive data from, interact with, and/or control one or more of a vehicle identification device, a barrier gate, atoll collection device, a remaining parking space display device, and a terminal device. The parking lot controller 2471 may be configured to receive commands sent by the station control module 252 in the hub computing system 250 and to control one or more entities in the parking service station 244 to perform actions according to the received commands. For example, the parking lot controller 2471 may control the barrier gate to be opened or closed according to commands sent by the station control module 252, or be configured to control the toll collection device to update the toll standard. The parking lot controller 2471 may be configured to send data obtained from one or more of a vehicle identification device, a barrier gate, a toll collection device, a remaining parking space display device, and a terminal device to the station control module 252 in the hub computing system 250. When the parking lot in the reserved vehicle service station 247 and the parking lot in the parking service station 244 are configured as the same parking lot, the parking lot controller 2441 in the reserved vehicle service station 247 and the parking lot controller 2471 in the parking service station 244 are configured as the same device. The parking lot controller 2471 may comprise a processor and a data storage apparatus. The processor may be configured to execute instructions stored in the data storage apparatus to perform various functions including, but not limited to, the functions described above corresponding to the parking lot controller 2471. The processor may include one or more general-purpose processors (e.g., CPUs, GPUs) and/or one or more special-purpose processors (e.g., ASICs). In the case where the processor includes a plurality of processors, these processors can operate individually or in combination. The data storage apparatus may include one or more volatile computer-readable storage media and/or one or more non-volatile computer-readable storage media, such as optical, magnetic, and/or organic storage media and may be integrated in whole or in part with the processor. The data storage apparatus may be configured to store instructions executable by the processor to perform various functions including, but not limited to, the functions described above corresponding to the parking lot controller 2471.

The reserved vehicle may include one or more of a passenger vehicle, a commercial vehicle, a tractor, a trailer, and the like.

The passenger vehicle may include, but is not limited to, a basic passenger vehicle (e.g., a car), a multi-purpose vehicle (MPV), a sport utility vehicle (SUV), a special-purpose passenger vehicle, a cross passenger vehicle, and the like, and may be used to be dispatched to a road rescue scene to transfer personnel and to perform other tasks.

The commercial vehicle may include, but is not limited to, a pickup truck, a micro truck, a light truck, a dump truck, a goods carrier vehicle, a semi-trailer truck, a full-trailer truck, a van, and the like, may be used to be dispatched to a road rescue scene to transfer goods, and may also be used to perform a task of transporting goods in the warehouse.

The tractor may include, but is not limited to, a full-trailer tracker and a semi-trailer tractor, may be used to be dispatched to a road rescue scene to replace a failed vehicle, and may also be used to be dispatched to a dock.

The trailer may include, but is not limited to, a full trailer and a semi-trailer, may be used to be dispatched to a road rescue scene to replace a failed vehicle, and may also be dispatched to a dock for loading goods to be transported.

The reserved vehicle service station 247 may additionally or alternatively comprise other entities in addition to the aforementioned entities.

Each of the above service stations in the service area may be configured with an operator, a terminal device, an identity verification device, and a monitoring device.

The operator may be a professional who operates various devices in a corresponding service station, assists in completing or independently completes the relevant vehicle service items.

The terminal device may be configured as a device for interacting with the vehicles entering a corresponding service station (including, but not limited to, transmitting data with the vehicle, accepting the control of the vehicle, or exerting control over the vehicle). The terminal device may be configured to perform interaction with the vehicle according to a command input by the operator. The terminal device may be configured as a device in the form of a mobile phone, a palm-held computer, a tablet computer, a desktop computer, a portable notebook computer, an industrial PDA, a barcode scanner, an RFID reader, and the like. The terminal device may communicate with the vehicle through one or more of wireless communication technologies including wireless local area networks (WLANs) (e.g., wireless fidelity (Wi-Fi) networks), BT, GNSS, FM, NFC, IR, and the like.

The identity verification device may be configured as a device for verifying the identity of a foreign entity (e.g., a vehicle, and a device repairing personnel) entering a corresponding service station. The identity verification device may adopt one or more of the following authentication modes: an identity verification mode based on a shared key (such as password authentication), an identity verification mode based on biological characteristics (such as fingerprint authentication, iris authentication and profile picture authentication), an identity verification mode based on a public key encryption algorithm (such as secure socket layer (SSL) certificate and digital signature), HTTP basic authentication, session-cookie authentication, Token-based authentication, and open authorization (OAuth) authentication, and the like.

The monitoring device may be configured as a device that monitors any entity in a corresponding service station and the operations it implements. The monitoring device may include one or more of a video camera, an infrared camera, a pan-tilt, a display, a console, and the like.

Other types of service stations besides the aforementioned service stations may additionally or alternatively be provided in the service area. In one embodiment, a rest service station may also be provided in the service area. The rest service station may be configured to include vending machines, supermarkets, lodging rooms, entertainment venues, and the like, for providing service items including catering, rest, entertainment, consumption, and the like for the passengers.

As shown in FIG. 3, the hub computing system 250 may include a processor 251 and a data storage apparatus 252.

The processor 251 may be configured to execute instructions stored in the data storage apparatus 252 to perform various functions including, but not limited to, functions corresponding to a roadblock control module 253 and a station control module 254 as described below. The processor 251 may include a combination of one or more of a general-purpose processor (e.g., a CPU and a GPU), a special-purpose processor (e.g., an ASIC), a field programmable gate array (FPGA), a digital signal processor (DSP), an integrated circuit, a microcontroller, and the like. In the case where the processor 251 includes a plurality of processors, these processors can operate individually or in combination.

The data storage apparatus 252 may include one or more volatile computer-readable storage media and/or one or more non-volatile computer-readable storage media, such as optical, magnetic, and/or organic storage media. The data storage apparatus 252 may include a combination of one or more of a read-only memory (ROM), a random access memory (RAM), a flash memory, an electrically programmable read-only memory (EPROM), an electrically erasable programmable read-only memory (EEPROM), an embedded multi-media card (eMMC), a hard-disk drive, or any volatile or non-volatile media. The data storage apparatus 252 may be integrated in whole or in part with the processor 251. The data storage apparatus 252 may be configured to store instructions executable by the processor 251 to perform various functions including, but not limited to, functions corresponding to a roadblock control module 253 and a station control module 254 as described below.

The roadblock control module 253 may be configured to receive the identification results of the vehicle identification devices in the entrance roadblock 221 and the exit roadblock 231, and control the roadblock devices of the entrance roadblock 221 and the exit roadblock 231 to be opened or closed.

The station control module 254 may be configured to generate a series of commands according to a vehicle service scheme and send the commands to corresponding controllers, terminal devices, identity verification devices, or other entities configured in all service stations to cause the corresponding controllers and/or terminal devices to control the entities in the corresponding service stations to interact with the vehicle according to the commands. In one example, the station control module 254 may generate a fueling command according to a vehicle service scheme, wherein the fueling command comprises information about the amount of fuel; the station control module 254 may send the fueling command to the energy controller 2411 in the energy service station 241, then the energy controller 2411 may directly control the fuel dispenser to fill the auto-driving vehicle with a corresponding amount of fuel after receiving the fueling command; the energy controller 2411 may also forward the fueling command to the terminal device in the energy service station 241 after receiving the fueling command, and the terminal device prompts an operator to operate the fuel dispenser to fill the auto-driving vehicle with the corresponding amount of fuel through various display methods such as sound and light. The station control module 254 may also directly send the fueling command to a terminal device in the energy service station 241, so that the terminal device prompts an operator to operate the fuel dispenser to fill the auto-driving vehicle with the corresponding amount of fuel. In one example, the station control module 254 may generate a program updating command according to a vehicle service scheme, wherein the program updating command comprises a legal identity of an auto-driving vehicle needing to upgrade a program service; the station control module 254 may send the program updating command to an identity verification device in the network service station 245, the identity verification device performs authentication on the auto-driving vehicle entering the network service station 245 according to the legal identity comprised in the program updating command after receiving the program updating command, the identity verification device sends a notification message to the program updating device 2451 after the authentication is successful, and the program updating device 2451 receives the notification message and connects with the corresponding auto-driving vehicle and updates the program thereof. In one example, the station control module 254 may generate a sensor calibration command according to a vehicle service scheme, wherein the sensor calibration command comprises a type of a sensor to be calibrated; the station control module 254 sends the sensor calibration command to a terminal device in the repairing service station 242, and the terminal device prompts an operator to build or place a sensor calibration device corresponding to the corresponding type of sensor through various display methods such as sound and light. In one example, the station control module 254 may generate a payment command according to a vehicle service scheme, wherein the payment command comprises information of vehicle service fee to be paid by the auto-driving vehicle; the station control module 254 sends the payment command to the payment device at the exit roadblock 231, and the payment device receives the payment command and then determines whether the fee paid by the auto-driving vehicle is appropriate according to the information of vehicle service fee comprised in the payment command. The station control module 254 may be configured to receive data returned by the corresponding controller, terminal device, identity verification device, or other entities in all service stations, and understand and master the working states of all service stations. In one example, the energy controller 2411 in the energy service station 241 returns a notification message to the station control module 254 after the gas dispenser fills the auto-driving vehicle with gas, and the notification message comprises the total amount of gas filled and the corresponding fee. In one example, the warehouse controller 2431 in the warehouse service station 243 may sense a loading condition of the warehousing spaces in the warehouse from a sensor provided in the warehouse.

The data storage apparatus 252 may also be configured to store other instructions.

In addition to storing instructions, the data storage apparatus 252 may be configured to store various information such as the type and number of service stations comprised in a service area, a high-precision map of a road area, the total number of vehicles entering a hub service district, and a vehicle service list corresponding to each vehicle. All the information may be used by one or more of the hub computing system 250, various service stations, and vehicles during operation of the hub service district.

The hub computing system 250 may also be a plurality of computing apparatuses that distributively control one or more of the entrance roadblock 221, the exit roadblock 231, and various service stations.

The communication subsystem 260 may be configured to include one or more of an antenna, a base station, a satellite signal receiver, a filter, a power amplifier, a low noise amplifier (LNA), a switch, a modem processor, a baseband processor, and the like. The communication system 260 may communicate based on wireless communication technologies, which may include GSM, GPRS, CDMA, WCDMA, TD-SCDMA, LTE, BT, GNSS, FM, NFC, IR, and the like. The communication system 260 may be communicatively connected to one or more of the entrance roadblock 221, the exit roadblock 231, and the various service stations via a wireless communication network, a wired communication network, and/or other connection mechanisms.

The hub computing system 250 may be communicatively connected to the auto-driving vehicle and the hub service district via the communication system 260.

The hub computing system 250 may include a hub coordination device (HUB-ECU), which may include one or more second processors, one or more second memories, and computer instructions stored on the second memory and executable on the second processor. The second processor, when executing computer instructions in the second memory, performs the corresponding functions of the hub coordination module 255 as described below. The hub coordination module 255 may be configured to communicate with the vehicle coordination module 1509 (see FIG. 1) in the auto-driving vehicle to determine a vehicle service scheme and to control an entity in the hub service district to interact with the auto-driving vehicle according to the vehicle service scheme. Among them, the second processor may be configured as one or more general-purpose processors (e.g., a CPU and a GPU), one or more special-purpose processors (e.g., an ASIC), one or more field programmable gate arrays (FPGAs), one or more digital signal processors (DSPs), one or more integrated circuits, and/or one or more microcontrollers and the like in the processor 251. The second memory may be configured as one or more read-only memories (ROMs), one or more random access memories (RAMs), one or more flash memories, one or more electrically programmable memories (EPROMs), one or more electrically erasable programmable read-only memories (EEPROMs), one or more embedded multi-media cards (eMMCs), and/or one or more hard-disk drives, and the like in the data storage apparatus 252. The hub coordination module 255 may be implemented as a computer program product that, when run on a computer, implements a method for an auto-driving vehicle service that communicates with the vehicle coordination module 1509 in the auto-driving vehicle to determine a vehicle service scheme and to control the interaction of entities in the hub service district with the auto-driving vehicle according to the vehicle service scheme.

FIG. 9 shows a hub service district according to an embodiment of the present application, wherein the hub service district is configured with a hub coordination device HUB-ECU comprising a second processor, a second memory, and computer instructions stored on the second memory and executable on the second processor. When the second processor is executing the computer instructions in the second memory, the method corresponding to the following steps is performed: S91, communicating, by the hub coordination device (HUB-ECU), with a vehicle coordination device (ADV-ECU) of an auto-driving vehicle to determine a vehicle service scheme when the auto-driving vehicle needs a vehicle service; and S92, controlling, by the hub coordination device (HUB-ECU), an entity in a hub service district to interact with the auto-driving vehicle according to the vehicle service scheme.

### 3. Vehicle service system and auto-driving vehicle service system

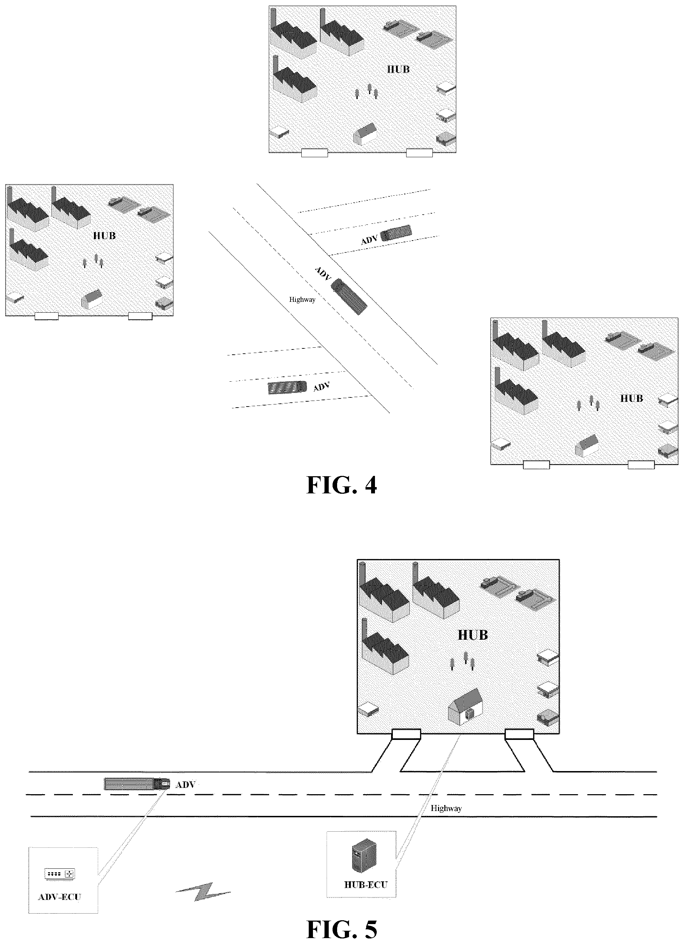

As shown in FIG. 4, the vehicle service system may be configured to comprise an auto-driving vehicle (ADV) and a hub service district (HUB). As shown in FIG. 5, the auto-driving vehicle service system may be configured to comprise a vehicle coordination device (ADV-ECU) and a hub coordination device (HUB-ECU).

The vehicle coordination device (ADV-ECU) communicates with the hub coordination device (HUB-ECU) to determine a vehicle service scheme, then the vehicle coordination device (ADV-ECU) and the hub coordination device (HUB-ECU) control the auto-driving vehicle (ADV) and the hub service district (HUB), respectively, to complete the interaction therebetween.

### 4. Vehicle service scheme

The process of the vehicle coordination device (ADV-ECU) and the hub coordination device (HUB-ECU) determining the vehicle service scheme may comprise determining a target hub service district and determining a vehicle service list.

The vehicle service list may comprise an identity of a current auto-driving vehicle and an identity of a target hub service district. Each auto-driving vehicle has its own identity, and different identities are configured for identifying different auto-driving vehicles; the identity may include, but is not limited to, an identity ID of the auto-driving vehicle (e.g., license plate numbers), a network contact address (e.g., MAC address and IP address of the wireless communication apparatus 141), and the like. The auto-driving vehicle needing a vehicle service and corresponding to the vehicle service list is simply referred to as the current auto-driving vehicle. Each hub service district has its own identity, and different identities are configured for identifying different hub service districts; the identity may include, but is not limited to, an identity ID of the hub service district (such as a name/sequence number of the hub service district, and a detailed address of the hub service district), a network contact address (such as a MAC address and an IP address of the communication system 260), and the like. The auto-driving vehicle needing a vehicle service may be identified through the identity of the current auto-driving vehicle comprised in the vehicle service list, and the target hub service district is a hub service district interacting with the auto-driving vehicle and providing vehicle services for the auto-driving vehicle. Therefore, the target hub service district may be identified as a hub service district for providing vehicle services for the auto-driving vehicle through the identity of the target hub service district comprised in the vehicle service list.

The vehicle service list may also comprise actual vehicle service items, that is, names of service items actually provided by the target hub service district for auto-driving vehicles, for example, one or more of vehicle service items such as fuel filling, gas filling, charging, power battery pack replacement, sensor calibration, vehicle fault diagnosis, maintenance and cleaning, sheet metal paint baking, mechanical fault repairing, vehicle part replacement, tire repairing, electronic component detection and repairing, loading, unloading, parking, program updating, on-site fuel filling, on-site gas filling, on-site charging, on-site power battery pack replacement, towing, on-site mechanical fault repairing, on-site vehicle part replacement, on-site tractor replacement, on-site trailer replacement, goods transfer, personnel transfer, road evacuation, and wounded rescue.

The vehicle service list may also comprise a vehicle service time, i.e., an implementation time of the actual vehicle service item, may be a start time and/or a duration when the one or more actual vehicle service items are executed as a whole, or may be a start time and/or a duration when any of the one or more actual vehicle service items are executed; wherein the start time and/or duration may be accurate to a time including information of year, month, day, hour, minute, and second.

The vehicle service list may also comprise a vehicle service place, that is, a place where an actual vehicle service item is implemented, for example, a certain area, a certain address, a certain hub service district, or other more detailed or brief locations.

The vehicle service list may also comprise an execution sequence of the actual vehicle service items, i.e., a sequence in which the actual vehicle service items are implemented when more than one actual vehicle service items is implemented for the auto-driving vehicle.

The vehicle service list may also comprise an authentication mode corresponding to the actual vehicle service item, that is, the identities of two parties (the auto-driving vehicle receiving the actual vehicle service item and the entity providing the actual vehicle service item) need to be authenticated before the actual vehicle service item is implemented, and the actual vehicle service item is implemented only after the identities are successfully authenticated. The authentication mode may include the technical types adopted for authentication, the legal identity information of both parties, and the like. Among them, the technical types adopted for authentication may include, but is not limited to, one or more of identity verification modes (such as secure socket layer (SSL) certificate and digital signature) based on a public key encryption algorithm, HTTP basic authentication, session-cookie authentication, Token-based authentication, open authorization (OAuth) authentication, and the like. The technical type adopted for authentication may be determined based on the authentication technology adopted by the identity verification device in each service station.

The vehicle service list may also comprise a vehicle service fee, i.e., a fee corresponding to the actual vehicle service items which may include a fee corresponding to each actual vehicle service item individually or may include fees corresponding to the all actual vehicle service items.

The vehicle service list may also comprise other information.

### 5. Vehicle requirement of auto-driving vehicle

The vehicle requirement of the auto-driving vehicle may include vehicle service items desired to receive by the auto-driving vehicle, and may be, for example, one or more of service items such as fuel filling, gas filling, charging, power battery pack replacement, sensor calibration, vehicle fault diagnosis, maintenance and cleaning, sheet metal paint baking, mechanical fault repairing, vehicle part replacement, tire repairing, electronic component detection and repairing, loading, unloading, parking, program updating, on-site fuel filling, on-site gas filling, on-site charging, on-site power battery pack replacement, towing, on-site mechanical fault repairing, on-site vehicle part replacement, on-site tractor replacement, on-site trailer replacement, goods transfer, personnel transfer, road evacuation, and wounded rescue.

The vehicle requirement of the auto-driving vehicle may further include a time at which the auto-driving vehicle is desired to receive a vehicle service, and may include one or more of a time range for starting to receive a vehicle service, a time range for continuously receiving vehicle services, and a time range for waiting for a vehicle service after the vehicle enters the hub service district, and the like.

The vehicle requirement of the auto-driving vehicle may further include a place where the auto-driving vehicle is desired to receive the vehicle service, and the place may be a certain area, a certain address, or a certain hub service district.

The vehicle requirements of the auto-driving vehicle may further include other information, such as one or more of an expense standard (e.g., gasoline price, and loading and unloading service price) for each vehicle service item that the auto-driving vehicle may receive, total fees for all vehicle service items that the auto-driving vehicle may receive, and the like.

The vehicle requirement of the auto-driving vehicle may be determined based on one or more of the following parameters:
(1) device operating states of the auto-driving vehicle including, but not limited to, operating states of the software devices and/or hardware devices comprised in the power system 110, the sensor system 120, the actuation system 130, the peripheral device system 140, and the vehicle computing system 150 in the auto-driving vehicle, wherein the operating states may include, for example, normal operation, fault, downtime, shutdown, startup, and the like;
(2) data stored by devices of the auto-driving vehicle including, but not limited to, various types of data stored in the software devices and/or hardware devices comprised in the power system 110, the sensor system 120, the actuation system 130, the peripheral device system 140, and the vehicle computing system 150 in the auto-driving vehicle, wherein these data may include, for example, a planned traveling path, point cloud data detected by the object sensor 1213, an image of the environment captured by the image sensor 1214, positioning information obtained by the position sensor 1211, speed data detected by the vehicle speed sensor 1221, acceleration data detected by the acceleration sensor, a lane change decision, an acceleration/deceleration decision, and the like;
(3) data transmitted between devices of the auto-driving vehicle including, but not limited to, various types of data transmitted between software devices, hardware devices, the software devices and the hardware devices comprised in the power system 110, the sensor system 120, the actuation system 130, the peripheral device system 140, and the vehicle computing system 150, wherein these data may include, for example, a planned traveling path, point cloud data detected by the object sensor 1213, an image of the environment captured by the image sensor 1214, positioning data obtained by the position sensor 1211, speed data detected by the vehicle speed sensor 1221, acceleration data detected by the acceleration sensor, a lane change decision, an acceleration/deceleration decision, and the like;
(4) working states of the auto-driving vehicle including, but not limited to, the working states of the auto-driving vehicle such as the manned/goods-carrying driving, driving with no-loading, parking for rest, temporary parking, waiting for loading/unloading, and loading/unloading;
(5) requirement corresponding to the tasks performed by the auto-driving vehicle including, but are not limited to, a starting place and/or a destination of the manned task, a starting time and/or a ending time of the manned task, a starting place and/or a destination of the goods transportation task, a starting time and/or a ending time of the goods transportation task, the types of goods (such as daily necessities, dangerous goods, frozen products and the like) in the goods transportation task;
(6) the current position of the auto-driving vehicle may be position data (e.g., latitude and longitude information) obtained by the position sensor 1211; and
(7) the traveling route of the auto-driving vehicle may be a planned traveling route from a starting point of the task to the destination of the task for performing a manned/goods-carrying task.

The vehicle requirement of the auto-driving vehicle may also be determined based on other parameters. The parameters (not limited to the above parameters (1) to (7)) for determining the vehicle requirement of the auto-driving vehicle will be collectively referred to as vehicle-related parameters hereinafter.

Vehicle-related parameters may be obtained by connecting with the software devices and/or hardware devices in the power system 110, the sensor system 120, the actuation system 130, the peripheral device system 140 and the vehicle computing system 150 of the auto-driving vehicle.

### 6. Service district resource of hub service district

The service district resource of the hub service district may include vehicle service items that the hub service district can provide, and the vehicle service items may be, for example, one or more of service items such as fuel filling, gas filling, charging, power battery pack replacement, sensor calibration, vehicle fault diagnosis, maintenance and cleaning, sheet metal paint baking, mechanical fault repairing, vehicle part replacement, tire repairing, electronic component detection and repairing, loading, unloading, parking, program updating, on-site fuel filling, on-site gas filling, on-site charging, on-site power battery pack replacement, towing, on-site mechanical fault repairing, on-site vehicle part replacement, on-site tractor replacement, on-site trailer replacement, goods transfer, personnel transfer, road evacuation, and wounded rescue.

The service district resource of the hub service district may further include a time when the hub service district may provide the vehicle service, and may include one or more of a time range when the vehicle service is started to be provided, a time range when the vehicle service is continuously provided, a time range when the vehicle waits for the vehicle service after entering the hub service district, and the like.

The service district resource of the hub service district may also include a place where the hub service district can provide a vehicle service, and the place may be a certain area or a certain address. For example, the place may be an area or address of a road rescue-related item, and a detailed address where the hub service district is located.

The service district resource of the hub service district may also include an expense standard for one or more vehicle service items provided by the hub service district, such as gasoline price, natural gas price, and charging service price standards.

The service district resource of the hub service district may also include other information.

The service district resource of the hub service district may be determined according to one or more of the following parameters:
(1) the working states of all service stations in the hub service district;
(2) the number of the vehicles entering the hub service district; and
(3) repairing and maintenance plan of the hub service district (plan for repairing or maintaining entities in the hub service district).

The service district resource of the hub service district may also be determined according to other parameters. The parameters (not limited to the above parameters (1) to (3)) for determining the service district resource of the hub service district will be collectively referred to as service district-related parameters hereinafter.

### 7. Vehicle coordination device communicating with hub coordination device to determining vehicle service scheme

Referring to FIGs. 4 and 5, in response to that the current auto-driving vehicle needs a vehicle service, the vehicle coordination device of the current auto-driving vehicle communicates with the hub coordination device of the hub service district to determine a vehicle service scheme. In the process that the vehicle coordination device communicates with the hub coordination device to determine a vehicle service scheme, the vehicle coordination device and the hub coordination device store vehicle service lists, and the vehicle coordination device and the hub coordination device share the vehicle service lists stored in the vehicle coordination device and the hub coordination device in a communication mode.

7.1 Referring to FIGs. 4 and 5, in some embodiments, the process of the vehicle coordination device communicating with the hub coordination device to determine the vehicle service scheme may comprise the following steps A1-A2:
Step A1, determining, by the vehicle coordination device, whether the current auto-driving vehicle needs a vehicle service or not.

Step A2, in response to that the vehicle coordination device determines that the current auto-driving vehicle in which the vehicle coordination device is located needs a vehicle service, the vehicle coordination device communicates with the hub coordination device to determine a vehicle service scheme.

Several representative implementations of the embodiments are described below.

Step A1, determining, by the vehicle coordination device, whether the current auto-driving vehicle needs a vehicle service or not.

The vehicle coordination device may determine whether the current auto-driving vehicle in which the vehicle coordination device is located needs a vehicle service before the current auto-driving vehicle starts a trip. In one example, the vehicle coordination device may determine whether the current auto-driving vehicle in which the vehicle coordination device is located needs a vehicle service or not in response to that the current auto-driving vehicle receives a transportation task, wherein the determination result may include that the current auto-driving vehicle needs a vehicle service at the current moment, and may also include that the current auto-driving vehicle needs a vehicle service at a certain moment in the future. The vehicle coordination device may determine whether a transportation task is received or not via the task receiving module 1507 of the current auto-driving vehicle.

The vehicle coordination device may also determine whether the current auto-driving vehicle in which the vehicle coordination device is located needs a vehicle service in the process that the current auto-driving vehicle travels. In one example, the vehicle coordination device may determine whether the current auto-driving vehicle in which the vehicle coordination device is located needs a vehicle service when the traveling mileage of the current auto-driving vehicle reaches a predetermined value.

The vehicle coordination device may trigger in real time a process of determining whether the current auto-driving vehicle requires a vehicle service, that is, the vehicle coordination device may circularly determine whether the current auto-driving vehicle requires a vehicle service or not since it is started.

The vehicle coordination device can trigger the process of determining whether the current auto-driving vehicle needs the vehicle service or not according to a preset time interval, for example, the vehicle coordination device performs the process of determining whether the current auto-driving vehicle needs the vehicle service or not every 5 minutes.

The vehicle coordination device can trigger the process of determining whether the current auto-driving vehicle needs a vehicle service or not when a predetermined condition is achieved. The predetermined conditions herein may include, but are not limited to, one or more of the following: the remaining energy is a predetermined percentage of the total energy capacity, the mileage reaches a predetermined value, a new transportation task is received, a predetermined period of time has passed since the last repairing time, a map file of the upcoming area is missing, the map file of the upcoming area needs to be updated, and the like.

The vehicle coordination device can trigger the process of determining whether the current auto-driving vehicle needs a vehicle service or not according to a preset time interval, and simultaneously trigger the determining process when a predetermined condition is achieved.

The process of the vehicle coordination device determining whether the current auto-driving vehicle in which the vehicle coordination device is located needs a vehicle service or not may comprise the following steps A11-A12:
Step A11, obtaining, by the vehicle coordination device, vehicle-related parameters.

The vehicle coordination device can obtain vehicle-related parameters by connecting with various software devices and/or hardware devices comprised in the power system 110, the sensor system 120, the actuation system 130, the peripheral device system 140 and the vehicle computing system 150.

The vehicle-related parameters include, but are not limited to, one or more of operating states of devices of the current auto-driving vehicle, data stored by devices of the current auto-driving vehicle, data transmitted between devices of the current auto-driving vehicle, working states of the current auto-driving vehicle, requirements corresponding to tasks performed by the current auto-driving vehicle, a current position of the current auto-driving vehicle, a traveling route of the current auto-driving vehicle, and the like.

Step A12, determining, by the vehicle coordination device, whether the current auto-driving vehicle needs a vehicle service or not according to the vehicle-related parameters.

The vehicle coordination device can utilize the vehicle-related parameters to determine whether the current auto-driving vehicle needs a vehicle service or not at the current moment or at a certain moment in the future.

Step A2, in response to that the vehicle coordination device determines that the current auto-driving vehicle in which the vehicle coordination device is located needs a vehicle service, the vehicle coordination device communicates with the hub coordination device to determine a vehicle service scheme.

The process of the vehicle coordination device communicating with the hub coordination device to determine the vehicle service scheme may comprise the following steps A21-A22:
Step A21, communicating, by the vehicle coordination device of the current auto-driving vehicle, with a hub coordination device in a plurality of hub service districts to determine a target hub service district.

Step A22, communicating, by the vehicle coordination device of the current auto-driving vehicle, with a hub coordination device in the target hub service district to determine a vehicle service list.

In one example, communicating, by the vehicle coordination device, with a hub coordination device in all hub service districts to determine a target hub service district in the step A21 may comprise the following steps A211-A214:
Step A211, determining, by the vehicle coordination device, at least part of vehicle requirements of the current auto-driving vehicle.

The vehicle requirements of the current auto-driving vehicle may include, but are not limited to, one or more of vehicle service items that the current auto-driving vehicle is desired to receive, a time that the current auto-driving vehicle is desired to receive vehicle services, a place where the current auto-driving vehicle is desired to receive vehicle services, an expense standard for each vehicle service item that the auto-driving vehicle may receive, total fees for all vehicle service items that the auto-driving vehicle may receive, and the like.

The vehicle coordination device can determine at least part of the vehicle requirements of the current auto-driving vehicle according to the vehicle-related parameters.

Due to the limitations of the current auto-driving vehicle, such as network instability and limited computing power, the vehicle coordination device may not be capable of independently determining all vehicle requirements of the current auto-driving vehicle, and therefore, in the process of searching for the target hub service district, the vehicle coordination device may only determine part of the vehicle requirements. For example, in the process of searching for the target hub service district, the vehicle coordination device determines that the current auto-driving vehicle needs one vehicle service item (e.g., fuel filling, and sensor calibration), and after determining the target hub service district, the other vehicle service items (e.g., program update) needed by the current auto-driving vehicle may be determined by the hub coordination device with the help of the stable network and the strong calculation power of the target hub service district.

Step A212, obtaining, by the vehicle coordination device, service district resource of at least one hub service district.

The vehicle coordination device may obtain the service district resource of the corresponding hub service district by communicating with the hub coordination device of each hub service district.

The service district resource of the hub service district includes, but is not limited to, one or more of vehicle service items that can be provided by the hub service district, a time when the hub service district can provide vehicle services, a place where the hub service district can provide vehicle services, an expense standard for one or more vehicle service items provided by the hub service district, and the like.

Each hub coordination device may determine the service district resources according to the service district-related parameters of the corresponding hub service district.

Step A213, determining, by the vehicle coordination device, at least one hub service district matched with the current auto-driving vehicle according to at least part of the vehicle requirements of the current auto-driving vehicle determined in step A211 and the service district resources of the at least one hub service district obtained in step A212.

The vehicle coordination device may determine that the current auto-driving vehicle is matched with the corresponding hub service district when it is determined that at least part of information both comprised in at least part of the vehicle requirements of the current auto-driving vehicle determined in step A211 and the service district resources of the at least one hub service district obtained in step A212 matches. The information matching comprises at least one of the following: the vehicle service items desired by the current auto-driving vehicle are at least partially the same as the vehicle service items that the hub service district can provide, the vehicle service times desired by the current auto-driving vehicle are overlapped with a time when the hub service district can provide the vehicle services, the vehicle service place desired by the current auto-driving vehicle is overlapped with a place where the hub service district can provide the vehicle services, the expense standard for all vehicle service items that the current auto-driving vehicle may receive is overlapped with an expense standard for all vehicle service items that the hub service district provides, and the like.

For example, at least part of the vehicle requirements of the current auto-driving vehicle comprise: fuel filling and sensor calibration in vehicle service items desired by the current auto-driving vehicle, a vehicle service time being from 16:00 to 17:00 on August 1, 2019 desired by the current auto-driving vehicle, and a vehicle service place being a road section in Shandong Province at the Beijing-Shanghai Expressway desired by the current auto-driving vehicle; service area resources of a certain hub service district comprise: vehicle service items which can be provided by the hub service district comprise fuel filling, gas filling, charging, power battery pack replacement, sensor calibration, vehicle fault diagnosis, maintenance and cleaning, sheet metal paint baking, mechanical fault repairing, tire repairing, electronic component detection and repairing and program updating, a time for which the hub service district can provide a vehicle service being from 8:00 to 22:00 on August 1, 2019, and a place for which the hub service district can provide a vehicle service being a road section in Jining City, Shandong Province at the Beijing-Shanghai Expressway; both the vehicle requirement of the auto-driving vehicle and the service district resource of the hub service district comprise items of fuel filling and sensor calibration, and have the overlapped time and the overlapped place, so that it may be determined that the current auto-driving vehicle is matched with the hub service district.

Step A214, determining, by the vehicle coordination device, a target hub service district from at least one hub service district matched with the current auto-driving vehicle.

The vehicle coordination device may send a reservation request to the hub coordination device of each hub service district matching the current auto-driving vehicle, wherein the reservation request comprises the determined vehicle requirements and some basic information of the current auto-driving vehicle. Some basic information for the current auto-driving vehicle may include an identity of the current auto-driving vehicle, a type of the auto-driving vehicle, a type of energy, a type of transported goods, and the like.

In response to receiving the reservation request, the hub coordination device analyzes the vehicle requirements and the basic information of the current auto-driving vehicle, then determines whether a hub service district corresponding thereto may provide a proper vehicle service for the current auto-driving vehicle, and if the proper vehicle service may be provided, returns an agreement message. The hub coordination device may comprehensively consider the service district-related parameters of the hub service district corresponding thereto at the current moment, and the vehicle requirements and the basic information of the current auto-driving vehicle, and then determine whether the hub service district corresponding thereto may provide the proper vehicle service for the current auto-driving vehicle.

The vehicle coordination device determines the hub service district corresponding to the hub coordination device returning the agreement message as a target hub service district.

The vehicle coordination device may further select one or more of the hub service districts corresponding to the hub coordination devices returning the agreement message as the target hub service district according to some predetermined standards, which may include, but are not limited to, one or more of the following: determining a hub service district with the lowest expense standard for providing a vehicle service as a target hub service district; determining a hub service district closest to the current auto-driving vehicle as a target hub service district; and determining the hub service district with the shortest time for waiting for the vehicle service after the vehicle enters the hub service district as a target hub service district, and the like.

In one example, communicating, by the vehicle coordination device, with a hub coordination device in all hub service districts to determine a target hub service district may comprise the following steps A215-A219:
Step A215, determining and broadcasting, by the vehicle coordination device, at least part of the vehicle requirements of the current auto-driving vehicle, and receiving, by the hub coordination device, the at least part of the vehicle requirements of the current auto-driving vehicle broadcast by the vehicle coordination device.

The vehicle requirements of the current auto-driving vehicle may include, but are not limited to, one or more of vehicle service items that the current auto-driving vehicle is desired to receive, a time that the current auto-driving vehicle is desired to receive vehicle services, a place where the current auto-driving vehicle is desired to receive vehicle services, an expense standard for each vehicle service item that the auto-driving vehicle may receive, total fees for all vehicle service items that the auto-driving vehicle may receive, and the like.

The vehicle coordination device can determine at least part of the vehicle requirements of the current auto-driving vehicle according to the vehicle-related parameters.

Because current auto-driving vehicles are often in a fast moving state, network connection conditions tend to be unstable and the computing power of the vehicle computing system 150 is limited, the vehicle coordination device may not be able to independently determine all of the vehicle requirements of the current auto-driving vehicle.

Step A216, determining, by the hub coordination device, the service district resource of the hub service district corresponding to the hub coordination device.

The service district resource of the hub service district includes, but is not limited to, one or more of vehicle service items that can be provided by the hub service district, a time when the hub service district can provide vehicle services, a place where the hub service district can provide vehicle services, an expense standard for one or more vehicle service items provided by the hub service district, and the like.

Each hub coordination device may determine the service district resource according to the service district-related parameters of the corresponding hub service district.

Step A217, determining, by the hub coordination device, whether the hub service district corresponding thereto matches with the current auto-driving vehicle according to at least part of the vehicle requirements of the current auto-driving vehicle received in step A215 and the service district resources of the hub service district corresponding to the hub coordination device determined in step A216, and sending the matching result to the vehicle coordination device.

The matching result may comprise information whether the hub service district corresponding to the hub coordination device matches with the current auto-driving vehicle.

Step A218, receiving, by the vehicle coordination device, the matching result returned by the hub coordination device, and determining at least one hub service district matched with the current auto-driving vehicle according to the matching result.

Step A219, determining, by the vehicle coordination device, a target hub service district from at least one hub service district matched with the current auto-driving vehicle according to a predetermined standard, sending a notification message to the hub coordination device corresponding to the target hub service district, and determining the hub service district corresponding to the vehicle coordination device receiving the notification message as the target hub service district.

The vehicle coordination device may select one or more of the matched hub service districts as target hub service districts according to some predetermined standards, which may include, but are not limited to, one or more of the following: determining a hub service district with the lowest expense standard for providing a vehicle service as a target hub service district; determining a hub service district closest to the current auto-driving vehicle as a target hub service district; and determining the hub service district with the shortest time for waiting for the vehicle service after the vehicle enters the hub service district as a target hub service district, and the like.

The process of communicating, by the vehicle coordination device, with a hub coordination device in the target hub service district to determine a vehicle service list in step A22 may comprise one or more of the following steps A221-A226:
Step A221, determining, by the vehicle coordination device, the actual vehicle service item by communicating with the hub coordination device in the target hub service district.

In one example, determining, by the vehicle coordination device, the actual vehicle service item by communicating with the hub coordination device in the target hub service district may comprise the following steps A2211-A2213:

Step A2211, determining, by the vehicle coordination device, all vehicle service items desired by the current auto-driving vehicle.

The vehicle coordination device can obtain vehicle-related parameters by connecting with various software devices and/or hardware devices comprised in the power system 110, the sensor system 120, the actuation system 130, the peripheral device system 140 and the vehicle computing system 150.

The vehicle-related parameters include, but are not limited to, one or more of operating states of devices of the current auto-driving vehicle, data stored by devices of the current auto-driving vehicle, data transmitted between devices of the current auto-driving vehicle, working states of the current auto-driving vehicle, requirements corresponding to tasks performed by the current auto-driving vehicle, a current position of the current auto-driving vehicle, a traveling route of the current auto-driving vehicle, and the like.

The vehicle coordination device can determine various vehicle service items needed by the current auto-driving vehicle according to the vehicle-related parameters, i.e., all vehicle service items desired by the current auto-driving vehicle.

The vehicle coordination device may also determine a first part of vehicle service items desired by the current auto-driving vehicle according to the vehicle-related parameters, then obtain a second part of vehicle service items desired by the current auto-driving vehicle determined by the hub coordination device corresponding to the target hub service district, and finally determine a union set of the first part of vehicle service items and the second part of vehicle service items desired by the current auto-driving vehicle as all vehicle service items desired by the current auto-driving vehicle. The hub coordination device corresponding to the target hub service district may determine the second part of vehicle service items desired by the current auto-driving vehicle according to the vehicle-related parameters. The hub coordination device can obtain vehicle-related parameters by connecting with various software devices and/or hardware devices comprised in the power system 110, the sensor system 120, the actuation system 130, the peripheral device system 140 and the vehicle computing system 150 of the current auto-driving vehicle.

Because current auto-driving vehicles are often in a fast moving state, network connection conditions tend to be unstable and the computing power of the vehicle computing system 150 is limited, the vehicle coordination device may not be able to independently determine all of the vehicle requirements of the current auto-driving vehicle.

In this example, a part of the vehicle services desired by the current auto-driving vehicle are determined by the vehicle coordination device, and a part of the vehicle services are determined by the hub coordination device; this implementation may more fully and accurately determine the various vehicle service items desired by the current auto-driving vehicle with a stable network in the hub service district and a hub computing system 250 with great computing power.

The one or more vehicle service items desired by the current auto-driving vehicle determined by the vehicle coordination device may overlap with the one or more vehicle service items desired by the current auto-driving vehicle determined by the hub coordination device, i.e., both comprise one or more vehicle services.

Step A2212, sending, the hub coordination device in the target hub service district, all vehicle service items provided by the target hub service district to the vehicle coordination device.

The hub coordination device may determine the all vehicle service items which can be provided by the target hub service district according to the service district-related parameters of the target hub service district at the current moment.

Step A2213, calculating, by the vehicle coordination device, an intersection set of all vehicle service items desired by the current auto-driving vehicle determined in step A2211 and the all vehicle service items provided by the target hub service district received in step A2212, and determining the intersection set as an actual vehicle service item, and sending a notification message to the hub coordination device corresponding to the target hub service district; wherein the notification message comprises the determined actual vehicle service item.

In one example, determining, by the vehicle coordination device, the actual vehicle service item by communicating with the hub coordination device of the target hub service district may comprise the following steps A2214-A2216:
Step A2214, determining, by the vehicle coordination device, all vehicle service items desired by the current auto-driving vehicle, and sending the all vehicle service items desired by the current auto-driving vehicle to the hub coordination device corresponding to the target hub service district.

The vehicle coordination device can obtain vehicle-related parameters by connecting with various software devices and/or hardware devices comprised in the power system 110, the sensor system 120, the actuation system 130, the peripheral device system 140 and the vehicle computing system 150.

The vehicle-related parameters include, but are not limited to, one or more of operating states of devices of the current auto-driving vehicle, data stored by devices of the current auto-driving vehicle, data transmitted between devices of the current auto-driving vehicle, working states of the current auto-driving vehicle, requirements corresponding to tasks performed by the current auto-driving vehicle, a current position of the current auto-driving vehicle, a traveling route of the current auto-driving vehicle, and the like.

The vehicle coordination device can determine various vehicle service items needed by the current auto-driving vehicle according to the vehicle-related parameters, i.e., all vehicle service items desired by the current auto-driving vehicle.

The vehicle coordination device may also determine a first part of vehicle service items desired by the current auto-driving vehicle according to the vehicle-related parameters, then obtain a second part of vehicle service items desired by the current auto-driving vehicle determined by the hub coordination device corresponding to the target hub service district, and finally determine a union set of the first part of vehicle service items and the second part of vehicle service items desired by the current auto-driving vehicle as all vehicle service items desired by the current auto-driving vehicle. The hub coordination device corresponding to the target hub service district may determine the second part of vehicle service items desired by the current auto-driving vehicle according to the vehicle-related parameters. The hub coordination device can obtain vehicle-related parameters by connecting with various software devices and/or hardware devices comprised in the power system 110, the sensor system 120, the actuation system 130, the peripheral device system 140 and the vehicle computing system 150 of the current auto-driving vehicle.

Step A2215, determining, by the hub coordination device in the target hub service district, all vehicle service items provided by the hub service district corresponding to the hub coordination hub.

The hub coordination device may determine the all vehicle service items which can be provided by the target hub service district according to the service district-related parameters of the target hub service district at the current moment.

Step A2216, calculating, by the hub coordination device in the target hub service district, an intersection set of the all vehicle service items desired by the current auto-driving vehicle received in step A2214 and the all vehicle service items provided by the target hub service district determined in step A2215, determining the intersection set as an actual vehicle service item, and sending a notification message containing the actual vehicle service item to the vehicle coordination device.

Step A222, determining, by the vehicle coordination device, an execution sequence of the actual vehicle service items by communicating with the hub coordination device in the target hub service district.

The vehicle coordination device can determine the execution sequence of the actual vehicle service items according to positions of service stations corresponding to the actual vehicle service items in the target hub service district and/or a dependency relationship of different actual vehicle service items.

The hub coordination device in the target hub service district may determine an execution sequence of the actual vehicle service items according to one or more of positions of service stations corresponding to the all actual vehicle service items in the target hub service district, a dependency relationship of the different actual vehicle service items and service district-related parameters of the target hub service district. Then, the hub coordination device in the target hub service district sends a notification message containing an execution sequence of the actual vehicle service items to the vehicle coordination device, so that the vehicle coordination device determines the execution sequence of the actual vehicle service items.

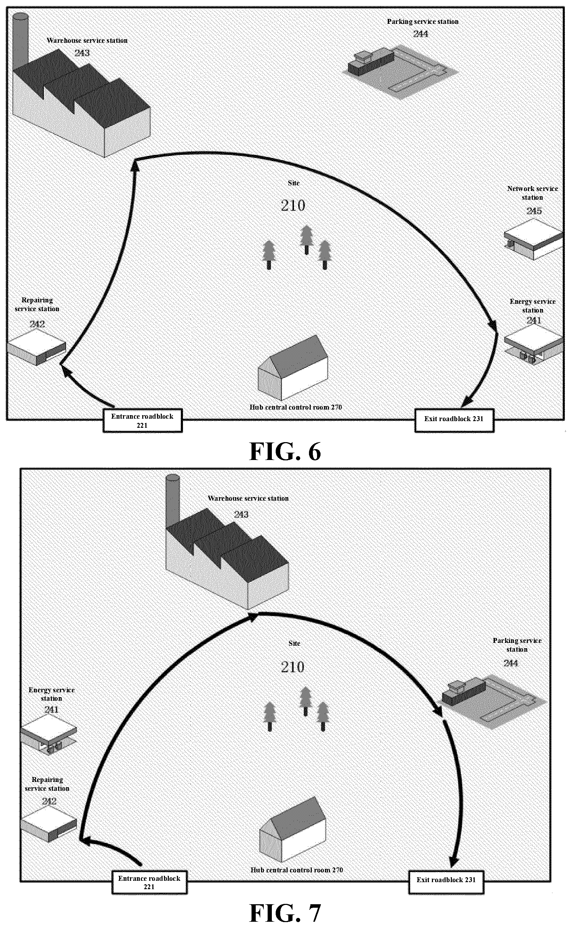

In the example shown in FIG. 6, the actual vehicle service items need to be provided by the target hub service district include fuel filling, sensor calibration, and loading. In the site 210 of the hub service district, the repairing service station 242 is located next to the entrance roadblock, the energy service station 241 is located next to the exit roadblock, and the warehouse service station 243 is located between the repairing service station 242 and the energy service station 241, so that the hub coordination device or the vehicle coordination device may determine the execution sequence of the all vehicle service items in the vehicle service list as: firstly, a sensor calibration item, then a loading item, and finally a fuel filling item. The arrowed lines in FIG. 6 represent the traveling route of the current auto-driving vehicle in the target hub service district in this example, and the arrows represent the heading of the vehicle.

In the example shown in FIG. 7, the actual vehicle service items needing to be provided by the target hub service district include sensor calibration, unloading, and parking. In the site 210 of the hub service district, the repairing service station 242 is located next to the entrance roadblock, the parking service station 244 is located next to the exit roadblock, and the warehouse service station 243 is located between the repairing service station 242 and the parking service station 244. Generally, a repairing item and a parking item need to be performed after an unloading item is completed, so that the hub coordination device and the vehicle coordination device may determine an execution sequence of vehicle service items in a vehicle service list as follows: firstly the unloading item, then performing the sensor calibration item, and finally the parking item. The arrowed lines in FIG. 7 represent the traveling route of the current auto-driving vehicle in the target hub service district in this example, and the arrows represent the heading of the vehicle.

Step A223, determining, by the vehicle coordination device, an authentication mode of the actual vehicle service item by communicating with the hub coordination device in the target hub service district.

The hub coordination device in the target hub service district may determine an authentication mode adopted by an entity corresponding to each actual vehicle service item in the hub service district corresponding to the hub coordination device as the authentication mode of each actual vehicle service item, and then send a notification message containing the authentication mode of each actual vehicle service item to the vehicle coordination device, so that the vehicle coordination device determines the authentication mode of each actual vehicle service item.

The authentication mode of the actual vehicle service item may comprise the technical types adopted for authentication, the legal identity information of the two parties and the like.

In one example, if an identity verification device in the energy service station adopts a verification mode of an SSL certificate, the hub coordination device in the target hub service district may determine that the authentication mode corresponding to fuel filling includes an SSL certificate verification mode, and meanwhile, the authentication mode also needs to include legal identity information of the current auto-driving vehicle and legal identity information of the target hub service district. The legal identity information of the current auto-driving vehicle may be the identity ID, the network contact address or other information used for verification of the current auto-driving vehicle. The legal identity information of the target hub service district may be the identity ID, network contact address or other information used for verification of the target hub service district.

Step A224, determining, by the vehicle coordination device, the vehicle service time by communicating with the hub coordination device in the target hub service district.

The hub coordination device in the target hub service district may determine a time when the target hub service district provides vehicle service for the current auto-driving vehicle according to the service district-related parameters of the target hub service district, and then sends a notification message containing the vehicle service time to the vehicle coordination device, so that the vehicle coordination device determines the vehicle service time.

Step A225, determining, by the vehicle coordination device, the vehicle service fee by communicating with the hub coordination device in the target hub service district.

The hub coordination device in the target hub service district may firstly determine an expense standard for each actual vehicle service item, then calculate a vehicle service fee for each actual vehicle service item received by the current auto-driving vehicle and/or a total vehicle service fees for all actual vehicle service items according to the expense standard, and then send a notification message containing the vehicle service fee to the vehicle coordination device, so that the vehicle coordination device determines the vehicle service fee.

Step A226, determining, by the vehicle coordination device, the vehicle service place by communicating with the hub coordination device in the target hub service district.

When actual vehicle service items (such as fuel filling, gas filling, charging, power battery pack replacement, sensor calibration, vehicle fault diagnosis, maintenance and cleaning, sheet metal paint baking, mechanical fault repairing, tire repairing, electronic component detection and repairing, loading, unloading, parking, and program updating) are implemented in the target hub service district, the hub coordination device or the vehicle coordination device in the target hub service district directly determines the address of the target hub service district corresponding thereto as the vehicle service place.

When actual vehicle service items (such as on-site fuel filling, on-site gas filling, on-site charging, on-site power battery pack replacement, towing, on-site mechanical fault repairing, on-site vehicle part replacement, on-site tractor replacement, on-site trailer replacement, goods transfer, personnel transfer, road evacuation, and wounded rescue) are road rescue-related items, the hub coordination device or the vehicle coordination device in the target hub service district may firstly determine a rescue place and then determine the rescue place as the vehicle service place. The rescue place may be determined according to the position of the current auto-driving vehicle and/or the position of the target hub service district. For example, the rescue place may be the current position of the auto-driving vehicle, or may be a place between the current position of the auto-driving vehicle and the position of the target hub service district.

7.2 In one example, the vehicle coordination device triggers a process to determine whether the current auto-driving vehicle requires a vehicle service when the current auto-driving vehicle receives a transportation task. After the determination process is triggered, the vehicle coordination device obtains vehicle-related parameters by connecting with various software devices and/or hardware devices comprised in the power system 110, the sensor system 120, the actuation system 130, the peripheral device system 140 and the vehicle computing system 150 of the current auto-driving vehicle. The vehicle-related parameters comprise the following information:
(1) The requirements for the transportation task performed by the current auto-driving vehicle are as following: the loading address is Beijing, the unloading address is Shanghai, and the type of transported goods is frozen goods, wherein the starting time is 8:00 on July 29, 2019, and the ending time is 18:00 on July 29, 2019.
(2) The traveling route of the current auto-driving vehicle is the Beijing-Shanghai Expressway, wherein the starting address is Beijing and the ending address is Shanghai, and the approach sites are Tianjin, Hebei, Shandong and Jiangsu.
(3) The fuel tank volume of the current auto-driving vehicle is 100 liters, and the oil consumption per hundred kilometers is 20 liters.

The vehicle coordination device makes the following determinations according to the above vehicle-related parameters that: a fuel tank is filled with about 100 liters of fuel before the current auto-driving vehicle starts traveling, about 20 liters of fuel is left when the current auto-driving vehicle travels for about 400 kilometers, and at the moment, the vehicle needs to be supplemented with fuel in time; the current auto-driving vehicle starts from Beijing and travels at the Beijing-Shanghai Expressway, and when the current auto-driving vehicle travels to a road section in Jinning City, Shandong Province, it travels for about 350-420 kilometers, so that the vehicle, when traveling to the road section in Jinning City, Shandong Province at the Beijing-Shanghai Expressway, needs to be filled with fuel.

The vehicle coordination device determines that the current auto-driving vehicle needs a vehicle service based on the above determinations. After that, the vehicle coordination device continues to perform the following processing:

The vehicle coordination device obtains a pre-stored identity of the current auto-driving vehicle.

The vehicle coordination device determines a part of vehicle requirements of the current auto-driving vehicle according to the obtained vehicle-related parameters, wherein the vehicle requirements comprise the following information:
(1) The vehicle service places desired by the current auto-driving vehicle comprise: the hub service district along the road section in Dezhou City, Shandong Province at the Beijing-Shanghai Expressway and the hub service district along the road section in Jinan City, Shandong Province at the Beijing-Shanghai Expressway.
(2) The vehicle service items desired by the current auto-driving vehicle comprise: fuel filling and sensor calibration. When the mileage of the current auto-driving vehicle is about 400 kilometers, the residual fuel in the oil tank is about 1/4 of the total volume, so that the fuel filling service is needed; and the lidar and the binocular camera of the current auto-driving vehicle need to be calibrated again because of jolting during long-distance driving.
(3) A time for the vehicle services desired by the current auto-driving vehicle is: 12:00 to 14:00 on July 29, 2019. The time is estimated by the vehicle coordination device according to the information of the current auto-driving vehicle, such as mileage, travel speed, departure time and the like.

The vehicle coordination device determines candidate hub service districts including hub service districts along the road sections in Dezhou City and Jinan City, Shandong Province at the Beijing-Shanghai Expressway according to the above vehicle requirements of the current auto-driving vehicle. Then, the vehicle coordination device communicates with the candidate hub coordination devices in the hub service districts to obtain the service district resources of the candidate hub service districts.

In this example, there are 9 hub service districts along the road sections in Dezhou City and Jinan City, Shandong Province at the Beijing-Shanghai Expressway, the identities of these hub service districts are SD1-SD9, and the service district resources of these hub service districts are as follows:

| **Identities of hub service districts** | **Vehicle service items** |
|---|---|
| SD1 | Fuel filling, sensor calibration, mechanical fault repairing, tire repairing, electronic component detection and repairing, and program updating |
| SD2 | Charging, power battery pack replacement, sensor calibration, vehicle fault diagnosis, tire repairing, electronic component detection and repairing, and program updating |
| SD3 | Gas filling, mechanical fault repairing, tire repairing, electronic component detection and repairing, loading, unloading, parking, program updating, on-site fuel filling and on-site power battery pack replacement |
| SD4 | Charging, power battery pack replacement, sensor calibration, program updating, on-site fuel filling and on-site power battery pack replacement |
| SD5 | Fuel filling, loading, unloading, parking, program updating, on-site fuel filling, on-site gas filling and on-site power battery pack replacement |
| SD6 | Gas filling, loading, unloading, parking, program updating, on-site fuel filling and on-site vehicle part replacement |
| SD7 | Charging, power battery pack replacement, sensor calibration, vehicle fault diagnosis, mechanical fault repairing, tire repairing, electronic component detection and repairing, loading, unloading, parking and program updating |
| SD8 | Charging, power battery pack replacement, sensor calibration, vehicle fault diagnosis, mechanical fault repairing, tire repairing, electronic component detection and repairing, loading, unloading, parking and program updating |
| SD9 | Fuel filling, gas filling, sensor calibration, vehicle fault diagnosis, mechanical fault repairing, tire repairing, electronic component detection and repairing, loading, unloading, parking, program updating, on-site fuel filling, on-site gas filling, and on-site power battery pack replacement |

The vehicle coordination device matches a part of the determined vehicle requirements of the current auto-driving vehicle with service district resources of the hub service districts SD1-SD9. As can be seen from the above table, only the hub service districts SD1 and SD9 can provide both items of fuel filling and sensor calibration, so that the vehicle coordination device determines the hub service districts SD1 and SD9 as the hub service districts matched with the current auto-driving vehicle.

Further, the vehicle coordination device sends a reservation request to the hub service districts SD1 and SD9, wherein the reservation requests include some basic information of the current auto-driving vehicle, and the basic information includes the following:
(1) identity of the current auto-driving vehicle: ADV-0001;
(2) type of vehicle: a van;
(3) fuel type: 5# diesel fuel; and
(4) type of the transported goods: daily necessities.

In addition, the reservation request also includes a part of the determined vehicle requirements of the current auto-driving vehicle.

After receiving the reservation request, the hub coordination devices in the hub service districts SD1 and SD9 determine the service district-related parameters of their own hub service districts. The service district-related parameters of the hub service district SD1 comprise: the hub service district SD1 maintains an entity corresponding to the sensor calibration item in 12:00-13:00 at July 29, 2019. Since the maintenance plan may affect the hub service district SD1 to provide a vehicle service for the current auto-driving vehicle, the hub coordination device determines that the hub service district SD1 cannot provide a vehicle service for the current auto-driving vehicle. The service district-related parameters of the hub service district SD9 comprise: the hub service district SD9 maintains an entity corresponding to the gas filling item in 7:00-8:00 at July 29, 2019. Since the maintenance plan does not affect the hub service district SD9 to provide a vehicle service for the current auto-driving vehicle, the hub coordination device returns an agreement message to the vehicle coordination device.

In response to receiving the agreement message, the vehicle coordination device determines the hub service district SD9 as the target hub service district, and determines the identity of the target hub service district as SD9.

After the current auto-driving vehicle enters the hub service district SD9, the hub coordination device in the hub service district SD9 obtains the vehicle-related parameters by connecting with the various software devices and/or hardware devices comprised in the power system 110, the sensor system 120, the actuation system 130, the peripheral device system 140 and the vehicle computing system 150 of the current auto-driving vehicle. In this situation, the vehicle-related parameters comprise the following information:
(1) The requirement for the transportation task performed by the current auto-driving vehicle are as following: the loading address is Beijing, the unloading address is Shanghai, and the type of transported goods is frozen goods, wherein the starting time is 8:00 on July 29, 2019, and the ending time is 18:00 on July 29, 2019.
(2) The traveling route of the current auto-driving vehicle is the Beijing-Shanghai Expressway, wherein the starting address is Beijing and the ending address is Shanghai, and the approach sites are Tianjin, Hebei, Shandong and Jiangsu.
(3) The fuel tank volume of the current auto-driving vehicle is 100 liters, the oil consumption per hundred kilometers is about 20 liters, and the residual fuel volume is 15 liters.
(4) Jiangsu Province high-precision map file stored in the vehicle computing system 150 is version 1.0.

The hub coordination device in the hub service district SD9 determines that other vehicle requirement exist besides two service items of fuel filling and sensor calibration of the current auto-driving vehicle according to the latest determined vehicle-related parameters, and these new vehicle requirement comprise a program updating item. This is because the hub coordination device finds that the version 1.0 of the Jiangsu Province high-precision map file stored in the vehicle computing system 150 lags behind the latest version model 2.0 released on the network through the comparison of the version of the Jiangsu Province high-precision map file stored in the vehicle computing system 150 with the latest version model released on the network, and therefore the version needs to be updated in time.

The hub coordination device in the hub service district SD9 thus determines that the actual vehicle service items include fuel filling, sensor calibration, and program updating, and synchronously shares the names of these three actual vehicle service items to the vehicle coordination device.

In this example, in the site 210 of the hub service district SD9, the network service station is located next to the entrance roadblock, the energy service station is located next to the exit roadblock, and the repairing service station is located between the network service station and the energy service station, so the hub coordination device determines that the current auto-driving vehicle is to receive vehicle services in a sequence of: firstly, a program updating item, then a sensor calibration item and finally a fuel filling item.

In this example, three actual vehicle service items of fuel filling, sensor calibration and program updating need to be completed inside the hub service district, so that the hub coordination device in the hub service district SD9 determines the vehicle service place as the address of the hub service district SD9, i.e., the hub service district SD9 in Laiwu District, Jinan City, Shandong Province at the G2 Beijing-Shanghai Expressway.

In this example, the vehicle service list determined by the vehicle coordination device and the hub coordination device at least comprises the information shown in Table 1:

**Table 1**

| | |
|---|---|
| **Identity of current auto-driving vehicle** | ADV-0001 |
| **Identity of target hub service district** | SD9 |
| **Actual vehicle service items** | Fuel filling, program updating, and sensor calibration |
| **Execution sequence of the actual vehicle service items** | Firstly, program updating, then sensor calibration and finally fuel filling |
| **Vehicle service place** | Hub service district SD9 in Laiwu District, Jinan City, Shandong Province at the G2 Beijing-Shanghai Expressway |

**7.3** In one example, the vehicle coordination device determines in real time whether the current auto-driving vehicle needs a vehicle service or not in the traveling process of the current auto-driving vehicle. In this example, the vehicle coordination device obtains vehicle-related parameters in real-time by connecting with various software devices and/or hardware devices comprised in the power system 110, the sensor system 120, the actuation system 130, the peripheral device system 140 and the vehicle computing system 150 of the current auto-driving vehicle, and determines whether the current auto-driving vehicle requires vehicle services based on the vehicle-related parameters. At a certain moment, the vehicle-related parameters comprise the following information:
(1) the requirements for the transportation task performed by the current auto-driving vehicle are as following: the loading address is Beijing, the unloading address is Shanghai, and the type of transported goods is frozen goods, wherein the starting time is 8:00 on Thursday, August 29, 2019, and the ending time is 18:00 on Thursday, August 29, 2019;
(2) the traveling route of the current auto-driving vehicle is the Beijing-Shanghai Expressway, wherein the starting address is Beijing and the ending address is Shanghai, and the approach sites are Tianjin, Hebei, Shandong and Jiangsu;
(3) the fuel tank volume of the current auto-driving vehicle is 100 liters, the oil consumption per hundred kilometers is about 20 liters, and the current residual fuel volume is 30 liters;
(4) the left front tire, the right front tire, the left rear tire and the right rear tire are all LingLong Tire 6.50R16;
(5) the maximum single-tire load of the left front tire, the right front tire, the left rear tire and the right rear tire is 975 kg/2150 LBS, the maximum double-tire load is 875 kg/2150 LBS, and the maximum safe air pressure is 560 kpa/81 PSI;
(6) the left front tire pressure is 510 kpa, the right front tire pressure is 400 kpa, the left rear tire pressure is 550 kpa, and the right rear tire pressure is 550 kpa;
(7) the vehicle speed is 90 km/h; and
(8) the negative acceleration is 5 m/s.

According to the vehicle-related parameters described above, the vehicle coordination device determines the following: the right rear tire pressure is the same as the left rear tire pressure, and both are at a normal level; the left front tire pressure is at normal level; the right front tire pressure is lower than the left front tire pressure, the difference value is greater than 20%, and the right front tire pressure is at an abnormal level; the current auto-driving vehicle is running at a reduced speed; the right front tire has tire puncture or tire burst phenomenon and needs to be repaired; and the residual fuel volume is 30 liters, which needs to be supplemented in time.

The vehicle coordination device determines that the current auto-driving vehicle needs a vehicle service based on the above determinations. After that, the vehicle coordination device continues to perform the following processing:

The vehicle coordination device obtains a pre-stored identity of the current auto-driving vehicle.

The vehicle coordination device determines the vehicle requirement of the current auto-driving vehicle according to the obtained vehicle-related parameters, wherein the vehicle requirement comprise the following information:
(1) the vehicle service place desired by the current auto-driving vehicle is 117 degrees 45 minutes 1.3 seconds east longitude, 36 degrees 13 minutes 16.6 seconds north latitude, and the place is a GPS position obtained after the current auto-driving vehicle slowly decelerates and stops at an emergency stop zone of a road section in Laiwu District, Jinan City, Shandong Province at the Beijing-Shanghai Expressway; and
(2) the vehicle service items desired by the current auto-driving vehicle comprise: on-site vehicle part (tire) replacement and on-site fuel filling.

The vehicle coordination device broadcasts the vehicle requirement through a 5G mobile communication network. All hub coordination devices receiving the vehicle requirements compares the vehicle requirement with the service district resources of the hub service districts corresponding to the hub coordination device, and determines whether the corresponding hub service districts is matched with the current auto-driving vehicle or not. In the matching process, because the vehicle service place desired by the current auto-driving vehicle is located in a road section in Laiwu District, Jinan City, Shandong Province at the Beijing-Shanghai Expressway, and the hub service districts along the road section which are not located in Jinan City, Shandong Province at the Beijing-Shanghai Expressway are determined to be unmatched based on the principle of nearest rescue. There are 5 hub service districts along the road sections in Jinan City, Shandong Province at the Beijing-Shanghai Expressway, the identities of these hub service districts are SD5-SD9, and the service district resources of these hub service districts are as follows:

| **Identities of hub service districts** | **Vehicle service items** |
|---|---|
| SD5 | Fuel filling, loading, unloading, parking, program updating, on-site fuel filling, on-site gas filling and on-site power battery pack replacement |
| SD6 | Gas filling, loading, unloading, parking, program updating, on-site fuel filling and on-site vehicle part replacement |
| SD7 | Charging, power battery pack replacement, sensor calibration, vehicle fault diagnosis, mechanical fault repairing, tire repairing, electronic component detection and repairing, loading, unloading, parking and program updating |
| SD8 | Charging, power battery pack replacement, sensor calibration, vehicle fault diagnosis, mechanical fault repairing, tire repairing, electronic component detection and repairing, loading, unloading, parking and program updating |
| SD9 | Fuel filling, gas filling, sensor calibration, vehicle fault diagnosis, mechanical fault repairing, tire repairing, electronic component detection and repairing, loading, unloading, parking, program updating, on-site fuel filling, on-site gas filling, on-site power battery pack replacement and on-site vehicle part replacement |

The hub coordination devices in the hub service districts SD5-SD9 match the vehicle requirement described above with the service district resources of the hub service district corresponding thereto. It may be seen from the above table, the hub service districts SD6 and SD9 may both provide on-site vehicle part replacement item and on-site fuel filling item, so that the hub coordination devices in the hub service districts SD6 and SD9 determine that the corresponding hub service districts SD6 and SD9 are matched with the current auto-driving vehicle, and return the matching results to the vehicle coordination device of the current auto-driving vehicle.

In response to receiving the matching result, the vehicle coordination device of the current auto-driving vehicle determines that the hub service districts SD6 and SD9 are matched with the current auto-driving vehicle, and further, the vehicle coordination device determines that the distance between the hub service district SD6 and the current auto-driving vehicle is smaller than the distance between the hub service district SD9 and the current auto-driving vehicle (thereby determining that the hub service district SD6 may provide vehicle services more quickly), and thus determines the hub service district SD6 as the target hub service district.

Subsequently, the vehicle coordination device sends a notification message to the hub coordination device in the hub service district SD6, wherein the notification message includes information that the hub service district SD6 is selected as the target hub service district.

In addition, the vehicle coordination device also sends some basic information of the current auto-driving vehicle and the vehicle requirement described above to the hub coordination device in the hub service district SD6, and the basic information includes the following:
(1) identity of the current auto-driving vehicle: ADV-0001;
(2) type of vehicle: a van;
(3) fuel type: 5# diesel fuel; and
(4) type of the transported goods: daily necessities.

The hub coordination device in the hub service district SD6 determines that the vehicle service list at least comprises the information shown in Table 2 according to the basic information of the current auto-driving vehicle and the above vehicle requirements:

**Table 2**

| | |
|---|---|
| **Identity of current auto-driving vehicle** | ADV-0001 |
| **Identity of target hub service district** | SD6 |
| **Actual vehicle service items** | On-site vehicle part (tire) replacement and on-site fuel filling |
| **Vehicle service place** | 117 degrees 45 minutes 1.3 seconds east longitude, 36 degrees 13 minutes 16.6 seconds north latitude |

The hub coordination device in the hub service district SD6 sends out an entity in the road rescue service station to a vehicle service place according to the vehicle service list so as to provide a service of replacing tires on site for the current auto-driving vehicle.

### 8. Interaction between current auto-driving vehicle controlled by vehicle coordination device and entity in hub service district controlled by the hub coordination device according to vehicle service scheme

As shown in FIGs. 4 and 5, after the vehicle coordination device communicates with the hub coordination device to determine the vehicle service scheme, the vehicle coordination device of the current auto-driving vehicle and the hub coordination device in the target hub service district store the determined vehicle service list. The current auto-driving vehicle executes actions according to the vehicle service list under the control of the vehicle coordination device, and the target hub service district executes actions according to the vehicle service list under the control of the hub coordination device.

**8.1** Referring to FIGs. 4 and 5, in some embodiments, the process of the current auto-driving vehicle interacting with the entity in the target hub service district according to the vehicle service list comprises the following steps B1-B4:
Step B1, controlling, by the vehicle coordination device, the current auto-driving vehicle to enter the target hub service district when the vehicle service place comprised in the vehicle service list is the address of the target hub service district.

Step B2, determining, by the hub coordination device in the target hub service district, a service station in the target hub service district corresponding to all actual vehicle service items comprised in the vehicle service list; and controlling, by the vehicle coordination device, the current auto-driving vehicle to travel to the service stations corresponding to all actual vehicle service items in the target hub service district according to the actual vehicle service items comprised in the vehicle service list.

Step B3, interacting, by the current auto-driving vehicle, with the entity in the service station controlled by the hub coordination device under the control of the vehicle coordination device to complete the actual vehicle service item in response to that the current auto-driving vehicle arrives at the service station.

Step B4, logging, by the vehicle coordination device and hub coordination device, a progress of the entity in the service station interacting with the current auto-driving vehicle.

In step B1, the process of controlling, by the vehicle coordination device, the current auto-driving vehicle to enter the target hub service district may be implemented as follows:

When the actual vehicle service items comprised in the vehicle service list do not belong to the road rescue-related items, the vehicle service place is a position of the target hub service district. For example, vehicle service items such as fuel filling, gas filling, charging, power battery pack replacement, sensor calibration, vehicle fault diagnosis, maintenance and cleaning, sheet metal paint baking, mechanical fault repairing, vehicle part replacement, tire repairing, electronic component detection and repairing, loading, unloading, parking, and program updating need to be carried out in a target hub service district.

The process of the vehicle coordination device controlling the current auto-driving vehicle to enter the target hub service district may comprise: sending, by the vehicle coordination device, the address of the target hub service district as a destination to a navigation module 1504 of the current auto-driving vehicle, planning, by the navigation module 1504, a traveling path according to the current position of the current auto-driving vehicle and the destination, and then traveling, by the current auto-driving vehicle, to the destination from the current position under the combined action of a positioning fusion module 1501, a sensing module 1502, a traveling state determination module 1503, the navigation module 1504, a decision module 1505, and a traveling control module 1506.

The process of the vehicle coordination device controlling the current auto-driving vehicle to travel to the service station corresponding to all actual vehicle service items in the target hub service district in step B2 may be implemented as follows:
each hub service district comprises one or more service stations, such as an energy service station, a repairing service station, a warehouse service station, a parking service station, and a network service station. An entity at each service station may provide one or more vehicle services for the auto-driving vehicle. For example, the energy service station may provide vehicle service items such as fuel filling, gas filling, charging, power battery pack replacement and the like; the repairing service station may provide vehicle service items such as sensor calibration, vehicle fault diagnosis, maintenance and cleaning, sheet metal paint baking, mechanical fault repairing, vehicle part replacement, tire repairing, and electronic component detection and repairing; the warehouse service station may provide vehicle service items such as loading, and unloading; the parking service station provides parking service items; and the network service station provides program updating service items.

The process of the vehicle coordination device controlling the current auto-driving vehicle to travel to the service station corresponding to each actual vehicle service item in the target hub service district may comprise the following steps B21-B22:

Step B21, determining, by the vehicle coordination device, a traveling route of the current auto-driving vehicle in the target hub service district.

The vehicle coordination device can plan a traveling route of the current auto-driving vehicle in the target hub service district according to the high-precision map of the target hub service district. The high-precision map of the target hub service district may comprise distribution information of a service area, a road area, an entrance 220 and an exit 230. The distribution information of the service area may include the specific distribution situation of each service station and the arrangement situation of entities in each service station. The distribution information of the road area may include information of road types, road connectivity situation, traffic labels, crosswalks, road geometric features, and the like.

The vehicle coordination device may determine a sequence in which the auto-driving vehicle arrives at service stations corresponding to all actual vehicle service items according to the execution sequence of the all actual vehicle service items comprised in the vehicle service list, then determine the distribution situation of the corresponding service station by combining with the high-precision map of the target hub service district, and finally determine the traveling route of the current auto-driving vehicle in the target hub service district according to the sequence in which the current auto-driving vehicle arrives at the corresponding service station and the distribution situation of the corresponding service station.

The vehicle coordination device can control the current auto-driving vehicle to travel in the target hub service according to a traveling route planned for the current auto-driving vehicle by the hub coordination device in the target hub service district. The hub coordination device in the target hub service district can plan a traveling route for the current auto-driving vehicle according to the high-precision map of the target hub service district. The hub coordination device in the target hub service district may also plan a traveling route for the current auto-driving vehicle according to an execution sequence of all actual vehicle service items comprised in the vehicle service list, and in combination with positions of service stations corresponding to all actual vehicle service items.

Step B22, controlling, by the vehicle coordination device, the current auto-driving vehicle to travel to the service station corresponding to each actual vehicle service item in the target hub service district according to the traveling route.

The vehicle coordination device may send the determined traveling route to the decision module 1505 of the current auto-driving vehicle to generate the route point information of the vehicle according to the traveling route, and then the traveling control module 1506 may control the actuation system 130 to drive the current auto-driving vehicle to travel according to the route point information.

The interaction of the current auto-driving vehicle with the entity in the service station controlled by the hub coordination device under the control of the vehicle coordination device in step B3 may be implemented as follows:
the vehicle coordination device and the hub coordination device control mutual authentication of the current auto-driving vehicle and the entities in the target hub service district according to the authentication mode of each actual vehicle service item comprised in the vehicle service list; after the authentication of the current auto-driving vehicle and the entities in the target hub service district is successful, the corresponding actual vehicle service items are interactively completed.

The authentication mode may include the technical types adopted for authentication, the legal identity information of both parties, and the like. Among them, the technical types adopted for authentication may include, but is not limited to, one or more of identity verification modes (such as SSL certificate and digital signature) based on a public key encryption algorithm, HTTP basic authentication, session-cookie authentication, Token-based authentication, open authorization (OAuth) authentication, and the like.

When the entity is a fuel dispenser, a gas dispenser, an AC charging pile, a DC charging pile, an AC/DC integrated charging pile, a battery swapping station, a crane, a transfer robot, a loading and unloading platform, a toll collection device, a procedure updating device, or the like, the current auto-driving vehicle can directly perform mutual authentication with the corresponding devices.

When the entity is an operator, the current auto-driving vehicle may be mutually authenticated with a terminal device held by the operator.

The vehicle coordination device may control the current auto-driving vehicle to pay for the entity in the target hub service district according to the vehicle service fee comprised in the vehicle service list. The current auto-driving vehicle may pay the cost to the entity in the target hub service district through a contact card swiping or networking fee deduction mode. The vehicle service fee may include a fee for each of the actual vehicle service items individually or may include fees for the all actual vehicle service items. The payment process may be that after each actual vehicle service item is completed, the completed actual vehicle service item is immediately paid, or the all actual vehicle service items are paid after the all actual vehicle service items are completed.

The hub coordination device may determine whether a fee paid to the entity in the target hub service district by the current auto-driving vehicle is consistent with the vehicle service fee comprised in the vehicle service list according to the vehicle service fee comprised in the vehicle service list, and if not, then it is indicated that the current auto-driving vehicle pays the wrong fee, and the fee needs to be paid additionally or refunded.

The process of logging the process of the entity in the service station interacting with the current auto-driving vehicle by the vehicle coordination device and the hub coordination device in step B4 may be implemented as follows:
the vehicle coordination device and/or the hub coordination device may log during the process of the auto-driving vehicle interacting with the entities in the target hub service district to complete each actual vehicle service item. The log may comprise one or more of starting time, ending time, duration, content, and the like of the actual vehicle service item. The content of the actual vehicle service item may comprise an operation object (such as a tire and an engine), a model of the operation object (such as a tire model and an engine model), an operation name (such as replacing a tire or repairing a tire and replacing an engine), and the like.

**8.2** Referring to FIGs. 4 and 5, in some embodiments, the process of the current auto-driving vehicle interacting with the entity in the hub service district according to the vehicle service list comprises the following steps C1-C4:
Step C1, firstly determining, by the hub coordination device, a rescue place when the vehicle service place comprised in the vehicle service list is the rescue place, then determining one or more entities for providing each actual vehicle service item according to each actual vehicle service item comprised in the vehicle service list, and dispatching the entities to the rescue place; and determining, by the vehicle coordination device, whether the current auto-driving vehicle has arrived at the rescue place or not.

Step C2, determining whether the entities in the target hub service district arrive at the rescue place or not when the vehicle coordination device determines that the current auto-driving vehicle has arrived at the rescue place.

Step C3, controlling the entities to interact with the current auto-driving vehicle controlled by the vehicle coordination device to complete each actual vehicle service item after the hub coordination device determines that the dispatched entities arrive at the rescue place.

Step C4, logging, by the vehicle coordination device and the hub coordination device, a process of the entity arriving at the rescue place interacting with the current auto-driving vehicle.

Step C1 may be implemented as follows:
when the actual vehicle service items comprised in the vehicle service list belong to road rescue-related items, the vehicle service place is an on-site road rescue place, that is, a rescue place. Vehicle service items such as on-site fuel filling, on-site gas filling, on-site charging, on-site power battery pack replacement, towing, on-site mechanical fault repairing, on-site vehicle part replacement, on-site tractor replacement, on-site trailer replacement, goods transfer, personnel transfer, road evacuation, and wounded rescue need to be performed at the rescue place.

The rescue place may be the current position of the auto-driving vehicle, or may be a place between the current position of the auto-driving vehicle and the position of the target hub service district.

Step C2 may be implemented as follows:
the vehicle coordination device may sense various entities of the rescue place (not limited to being from the target hub service district) through sensors (e.g., a camera and a lidar) on the auto-driving vehicle, and/or communicate with entities of the rescue place (not limited to being from the target hub service district) through peripheral devices (wireless communication apparatus, a wired communication interface 142, a microphone, a touch screen display, etc.) on the auto-driving vehicle, thereby determining whether the entities in the target hub service district arrive at the rescue place or not.

Step C3 may be implemented as follows:
the vehicle coordination device and the hub coordination device may control mutual authentication of the current auto-driving vehicle and entities from the target hub service district arriving at the rescue place according to the authentication mode of each actual vehicle service item comprised in the vehicle service list; after the authentication of the current auto-driving vehicle and the entities from the target hub service district is successful, the corresponding actual vehicle service items are interactively completed.

The authentication mode may include the technical types adopted for authentication, the legal identity information of both parties, and the like. Among them, the technical types adopted for authentication may include, but is not limited to, one or more of identity verification modes (such as SSL certificate and digital signature) based on a public key encryption algorithm, HTTP basic authentication, session-cookie authentication, Token-based authentication, open authorization (OAuth) authentication, and the like.

When the entity is a device such as a mobile repairing vehicle, a mobile energy vehicle, a trailer, a reserved tractor, a reserved trailer, reserved vehicle parts, a reserved passenger vehicle, a reserved commercial vehicle, a road evacuation device and an ambulance, the current auto-driving vehicle may be directly mutually authenticated with the corresponding devices.

When the entity is an operator, the current auto-driving vehicle may be mutually authenticated with a terminal device held by the operator.

The vehicle coordination device may control the current auto-driving vehicle to pay for the entity in the target hub service district at the rescue place according to the vehicle service fee comprised in the vehicle service list. The current auto-driving vehicle may pay the cost to the entity in the target hub service district through a contact card swiping or networking fee deduction mode. The vehicle service fee may include a fee for each of the actual vehicle service items individually or may include fees for the all actual vehicle service items. The payment process may be that after each actual vehicle service item is completed, the completed actual vehicle service item is immediately paid, or the all actual vehicle service items are paid after the all actual vehicle service items are completed.

The hub coordination device may determine whether a fee paid to the entity in the target hub service district by the current auto-driving vehicle is consistent with the vehicle service fee comprised in the vehicle service list according to the vehicle service fee comprised in the vehicle service list, and if not, then it is indicated that the current auto-driving vehicle pays the wrong fee, and the fee needs to be paid additionally or refunded.

The process of logging, by the vehicle coordination device and the hub coordination device, the interaction between the entity arriving at the rescue place and the current auto-driving vehicle in step C4 may be implemented as follows:

the vehicle coordination device and/or the hub coordination device may log during the process of the auto-driving vehicle interacting with the entities in the target hub service district to complete each actual vehicle service item. The log may comprise one or more of starting time, ending time, duration, content, and the like of the actual vehicle service item. The content of the actual vehicle service item may comprise an operation object (such as a tire and an engine), a model of the operation object (such as a tire model and an engine model), an operation name (such as replacing a tire or repairing a tire and replacing an engine), and the like.

**8.3** According to the example in section 7.2, the vehicle service list comprises at least the following information:

| | |
|---|---|
| **Identity of current auto-driving vehicle** | ADV-0001 |
| **Identity of target hub service district** | SD9 |
| **Actual vehicle service items** | Fuel filling, program updating, and sensor calibration |
| **Execution sequence of the actual vehicle service items** | Firstly, program updating, then sensor calibration and finally fuel filling |
| **Vehicle service place** | Hub service district SD9 in Laiwu District, Jinan City, Shandong Province at the G2 Beijing-Shanghai Expressway |

In this example, the vehicle coordination device controls the current auto-driving vehicle ADV-0001 to travel to a road section in Laiwu District, Jinan City, Shandong Province at the G2 Beijing-Shanghai Expressway, and enter the target hub service district SD9.

The current auto-driving vehicle ADV-0001 enters the target hub service district SD9 through the entrance roadblock at the entrance 220 of the target hub service district SD9.

The vehicle coordination device of the current auto-driving vehicle ADV-0001 plans the traveling route of the current auto-driving vehicle ADV-0001 according to the three actual vehicle service items (fuel filling, program updating and sensor calibration) comprised in the vehicle service list, the execution sequence of the three actual vehicle service items (firstly program updating, then sensor calibration and finally fuel filling) and the high-precision map of the target hub service district SD9.

According to the traveling route, the current auto-driving vehicle ADV-0001 firstly travels to a network service station, then travels to a repairing service station, and finally travels to the energy service station.

The current auto-driving vehicle ADV-0001, when arriving at the network service station, firstly performs mutual authentication with the program updating device in the network service station, and after the authentication is successful, the wireless communication apparatus 141 or the wired communication interface 142 of the current auto-driving vehicle ADV-0001 is successfully connected with the program updating device and receives services such as checking and updating from the program updating device. The checking module of the program updating device checks and determines the versions of algorithm modules such as a positioning fusion module 1501, a sensing module 1502, a driving state determination module 1503, a navigation module 1504, a decision module 1505, and a traveling control module 1506 in the current auto-driving vehicle ADV-0001 and the versions of high-precision electronic maps of regions such as Beijing City, Tianjin City, Hebei Province, Shandong Province and Jiangsu Province which are used, the searching module searches the latest versions of these electronic files in the network, and the comparison module compares the versions of the electronic files in the current auto-driving vehicle ADV-0001 with the corresponding latest versions to find that the version 1.0 of the Jiangsu Province high-precision map used in the current auto-driving vehicle ADV-0001 lags behind the latest version model 2.0 released on the network, and therefore the version needs to be updated in time, so that the updating module downloads the Jiangsu Province high-precision map file of the version 2.0 from the network to update the version of the Jiangsu Province high-precision map file in the current auto-driving vehicle ADV-0001. In this process, the vehicle coordination device or the hub coordination device records the following log information: the authentication result of the current auto-driving vehicle ADV-0001 and the program updating device, the Jiangsu Province high-precision map file, the updated Jiangsu Province high-precision map file from version 1.0 to version 2.0, and connecting time and disconnecting time of the current auto-driving vehicle ADV-0001 with the program updating device.

In this example, when the current auto-driving vehicle ADV-0001 arrives at the network service station, it may also be mutually authenticated and connected with the network connection device in the network service station. When connected, the current auto-driving vehicle ADV-0001 may update the network platform with a network for connecting to a particular network, such as a program of the type of auto-driving vehicle, through the network connection device. The current auto-driving vehicle ADV-0001 firstly utilizes a self-contained program updating algorithm to retrieve and determine the versions of algorithm modules such as the positioning fusion module 1501, the sensing module 1502, the driving state determination module 1503, the navigation module 1504, the decision module 1505, and the traveling control module 1506 and the versions of the high-precision electronic maps of provinces and cities which are used, then searches the latest versions of these electronic files in a connected specific network, compares the versions of the electronic files in the current auto-driving vehicle ADV-0001 with the corresponding latest versions, and downloads, when finding that the version of one electronic file lags behind the model of the latest version released on the network, the latest version of the electronic file from the specific network to update the version of the current auto-driving vehicle ADV-0001. In this process, the vehicle coordination device or the hub coordination device may record the corresponding log information.

In this example, an operator may utilize a terminal device to interact with the current auto-driving vehicle ADV-0001 to complete the payment of a fee for the program updating item.

When the program updating item is completed, the current auto-driving vehicle ADV-0001 travels to the repairing service station. The current auto-driving vehicle ADV-0001, after entering a repairing service station, firstly performs mutual authentication with the identity verification device in the service station, and after the authentication is successful, an operator in the repairing service station learns that the auto-driving vehicle needs a sensor calibration service by utilizing a terminal device, and then the operator in the repairing service station calibrates a binocular camera of the current auto-driving vehicle ADV-0001 by utilizing checkerboard target calibration, and calibrates a lidar of the current auto-driving vehicle ADV-0001 by utilizing a corner reflector. In the calibration process, the operator modifies related parameters of the binocular camera or the lidar of the current auto-driving vehicle ADV-0001 through the terminal device or peripheral devices such as a touch screen display of the current auto-driving vehicle ADV-0001. In the whole calibration process, the vehicle coordination device or the hub coordination device records the following log information: the authentication result of the current auto-driving vehicle ADV-0001 and the identity verification device, calibration objects of the binocular camera and the lidar, calibration devices comprises a checkerboard target calibration and a corner reflector, various parameter values before and after calibration, a time when an operator starts to calibrate the binocular camera and completes the calibration, a time when the operator starts to calibrate the lidar and completes the calibration, and a name and/or number of the operator.

In this example, the current auto-driving vehicle ADV-0001, after entering the repairing service station, may also perform mutual authentication with the terminal device of the operator, and perform a subsequent calibration process after the authentication is successful.

In this example, the operator may utilize the terminal device to interact with the current auto-driving vehicle ADV-0001 to complete the payment of a fee for a sensor calibration item.

When the sensor calibration item is completed, the current auto-driving vehicle ADV-0001 travels to the energy service station. The current auto-driving vehicle ADV-0001, after entering an energy service station, firstly performs mutual authentication with an identity verification device in the service station, and after the authentication is successful, an operator in the repairing service station obtains the capacity of a fuel tank of the auto-driving vehicle, the current residual fuel amount and the required added fuel amount by utilizing a terminal device, and then the operator operates a fuel gun in a fuel dispenser to aim at a fuel tank filling opening 220 of the auto-driving vehicle for fuel filling. After the required fuel amount is added, the terminal device may display and calculate the fuel fee. In this process, the vehicle coordination device or the hub coordination device records the following log information: an authentication result of the current auto-driving vehicle ADV-0001 and the identity verification device, an added fuel amount value, a fuel fee, a time of the operator holding the fuel gun to aim at the fuel tank filling opening and a time of leaving the fuel tank filling opening 220, and a name and/or number of the operator.

In this example, the current auto-driving vehicle ADV-0001, after entering the repairing service station, may also perform mutual authentication with the terminal device of the operator, and perform a subsequent calibration process after the authentication is successful.

In this example, the operator may utilize the terminal device to interact with the current auto-driving vehicle ADV-0001 to complete payment of a fee of the fuel filling item.

After the sensor calibration item is completed, the current auto-driving vehicle ADV-0001 travels to the exit 230 of the target hub service district SD9, and exits the target hub service district SD9 after passing through the exit roadblock.

In this example, the current auto-driving vehicle ADV-0001 can also pay total fees for the items of program updating, sensor calibration and fuel filling through interaction with a payment device at the exit 230 of the target hub service district SD9.

8.4 According to the example in section 7.3, the vehicle service list comprises at least the following some information:

| | |
|---|---|
| **Identity of current auto-driving vehicle** | ADV-0001 |
| **Identity of target hub service district** | SD6 |
| **Actual vehicle service items** | On-site vehicle part (tire) replacement and on-site fuel filling |
| **Vehicle service place** | 117 degrees 45 minutes 1.3 seconds east longitude, 36 degrees 13 minutes 16.6 seconds north latitude |

In this example, the vehicle coordination device obtains the position data collected by the on-board positioning device of the current auto-driving vehicle ADV-0001, and determines whether the current auto-driving vehicle ADV-0001 has arrived at the rescue place according to the position data, i.e., a geographic position corresponding to 117 degrees 45 minutes 1.3 seconds east longitude, 36 degrees 13 minutes 16.6 seconds north latitude, which is located on an emergency stop zone of a road section in Laiwu District, Jinan City, Shandong Province at the Beijing-Shanghai Expressway.

After it is determined that the current auto-driving vehicle ADV-0001 has arrived at the rescue place, the vehicle coordination device senses various entities of the rescue place utilizing a camera and a lidar on the auto-driving vehicle ADV-0001 and communicates with the various entities of the rescue place through peripheral devices such as a wireless communication apparatus, a wired communication interface 142, a microphone, a touch screen display or the like of the auto-driving vehicle ADV-0001.

The hub coordination device of the target hub service district SD6 dispatches a mobile energy vehicle and an operator according to the vehicle service list, and simultaneously carries reserved vehicle parts such as a terminal device and tires to the rescue place.

After arriving at the rescue place, the operator indicates himself/herself from the target hub service district SD6 by operating a touch screen display on the current auto-driving vehicle ADV-0001, and at the same time, the vehicle coordination device determines that the entity in the destination hub service district SD6 has arrived at the rescue place.

In this example, the operator can also connect with the wireless communication apparatus of the auto-driving vehicle ADV-0001 by the terminal device to send a message indicating that he or she is coming from the target hub service district SD6.

The operator arriving at the rescue place performs authentication with the vehicle coordination device of the current auto-driving vehicle ADV-0001 through the terminal device, and after the authentication is successful, detaches an unserviceable tire (right front wheel tire) of the current auto-driving vehicle ADV-0001, and replaces the right front tire with a new tire brought from the target hub service district SD6 to complete the on-site tire replacement service item. In this process, the operator can take pictures and/or record videos of the whole service process by utilizing the terminal device. The vehicle coordination device records the following log information: an authentication result of the vehicle coordination device and the terminal device, a type of the unserviceable tire, a type of the new tire, a price of the new tire, a time for the operator starting to detach the unserviceable tire, a time for the operator to complete the installation of the new tire, and a name and/or number of the operator.

After the on-site tire replacement item is completed, the operator obtains the capacity of a fuel tank of the auto-driving vehicle, the current residual fuel amount and the required added fuel amount by utilizing the terminal device, and then operates the mobile energy vehicle to add fuel to the current auto-driving vehicle ADV-0001, and after the required fuel amount is added, the terminal device can display and calculate the fuel fee. In this process, the vehicle coordination device records the following log information: an added fuel amount value, a fuel fee, a time for starting and ending the oil filling, and a name and/or number of the operator.

The operator utilizes the terminal device to interact with the current auto-driving vehicle ADV-0001 to complete the payment of fees for two items of on-site vehicle part (tire) replacement and on-site fuel filling.

After the two items of on-site vehicle part (tire) replacement and on-site fuel filling are completed, the current auto-driving vehicle ADV-0001 continues to travel to complete a corresponding transportation task, and the operator and the mobile energy vehicle carry the terminal device and the unserviceable tire to return to the target hub service district SD6.

From the above description of the embodiments, it can be clear to those skilled in the art that, for convenience and simplicity of description, only the division of the above functional modules is illustrated, and in practical applications, the above function distribution may be completed by different functional modules as needed, that is, the internal structure of the apparatus may be divided into different functional modules to complete all or part of the above described functions.

In the several embodiments provided in the present application, it should be understood that the disclosed apparatus and method may be implemented in other manners. For example, the above described apparatus embodiments are merely illustrative, and for example, the division of the modules or units is only one type of a logical functional division, and other divisions may be realized in practice, for example, multiple units or components may be combined or integrated into another apparatus, or some features may be omitted, or not performed. In addition, the shown or discussed mutual coupling or direct coupling or communication connection may be an indirect coupling or communication connection through some interfaces, apparatuses or units, and may be in an electrical, mechanical or other form.

The units described as separate parts may or may not be physically separate, and parts displayed as units may be one physical unit or a plurality of physical units, that is, may be located in one place, or may be distributed in a plurality of different places. Some or all of the units may be selected according to actual needs to achieve the purpose of the schemes of the embodiment. In addition, the functional units in the embodiments of the present application may be integrated into one processing unit, or each unit may exist alone physically, or two or more units are integrated into one unit. The integrated unit can be achieved in the form of hardware, and may also be achieved in the form of a software functional unit.

If the integrated unit is implemented in the form of a software functional unit and is sold or used as a separate product, it may be stored in a computer-readable storage medium. Based on such understanding, the technical scheme of the embodiments of the present application essentially can be, or part of the technical scheme contributing to the prior art may be, or part of the technical scheme may be embodied in a form of a software product. The software product is stored in a storage medium and comprises several instructions for enabling a device (which can be a single chip, a chip, and the like) or a processor to implement all or part of the steps of the method described in the embodiments of the present application. The aforementioned storage medium includes a U-disk, a removable hard disk, a read-only memory (ROM), a random access memory (RAM), a magnetic disk, an optical disk, or other media capable of storing program codes.

What is mentioned above is only specific embodiments of the present application, but the protection scope of the present application is not limited thereto, and changes or substitutions within the technical scope disclosed in the present application shall fall within the protection scope of the present application. Therefore, the protection scope of the present application shall be subject to the protection scope of the claims.

## Claims

1. A method for an auto-driving vehicle service applied to a vehicle coordination device configured in an auto-driving vehicle, comprising:
communicating, by the vehicle coordination device, with a hub coordination device to determine a vehicle service scheme in response to determining that the auto-driving vehicle needs a vehicle service, wherein the hub coordination device is configured in a hub service district; and
controlling, by the vehicle coordination device, the auto-driving vehicle to interact with an entity in the hub service district according to the vehicle service scheme.

2. The method for the auto-driving vehicle service according to claim 1, wherein determining, by the vehicle coordination device, whether the auto-driving vehicle needs the vehicle service or not comprises:
determining, by the vehicle coordination device, whether the auto-driving vehicle needs the vehicle service or not before the auto-driving vehicle starts traveling; and/or
determining, by the vehicle coordination device, whether the auto-driving vehicle needs the vehicle service or not in a traveling process of the auto-driving vehicle.

3. The method for the auto-driving vehicle service according to claim 1, wherein determining, by the vehicle coordination device, whether the auto-driving vehicle needs the vehicle service or not comprises:
determining in real time, by the vehicle coordination device, whether the auto-driving vehicle needs the vehicle service or not; or comprises one or two of the following:
periodically determining, by the vehicle coordination device, whether the auto-driving vehicle needs the vehicle service or not according to a preset time interval; and
determining, by the vehicle coordination device, whether the auto-driving vehicle needs the vehicle service or not in response to a predetermined condition being achieved.

4. The method for the auto-driving vehicle service according to claim 1, wherein determining, by the vehicle coordination device, whether the auto-driving vehicle needs the vehicle service or not comprises:
determining, by the vehicle coordination device, whether the auto-driving vehicle needs the vehicle service or not according to vehicle-related parameters of the auto-driving vehicle.

5. The method for the auto-driving vehicle service according to claim 1, wherein
communicating, by the vehicle coordination device, with the hub coordination device to determine the vehicle service scheme in response to determining that the auto-driving vehicle needs the vehicle service comprises:
communicating, by the vehicle coordination device, with the hub coordination device to determine a target auto-driving vehicle and a vehicle service list in response to determining that the auto-driving vehicle needs the vehicle service; and
then, controlling, by the vehicle coordination device, the auto-driving vehicle to interact with an entity in the hub service district according to the vehicle service scheme comprises:
controlling, by the vehicle coordination device, the auto-driving vehicle to interact with an entity in a target hub service district according to the vehicle service list.

6. The method for the auto-driving vehicle service according to claim 5, wherein communicating with the hub coordination device to determine the target auto-driving vehicle and the vehicle service list in response to determining that the auto-driving vehicle needs the vehicle service comprises:
determining, by the vehicle coordination device, a vehicle requirement of the auto-driving vehicle in response to determining that the auto-driving vehicle needs the vehicle service;
determining, by the vehicle coordination device, the target hub service district according to the vehicle requirement of the auto-driving vehicle; and
communicating, by the vehicle coordination device, with the hub coordination device in the target hub service district to determine the vehicle service list.

7. The method for the auto-driving vehicle service according to claim 6, wherein the vehicle requirement of the auto-driving vehicle comprises one or more of the following:
a desired vehicle service item for the auto-driving vehicle;
a desired vehicle service time for the auto-driving vehicle; or
a desired vehicle service place for the auto-driving vehicle.

8. The method for the auto-driving vehicle service according to claim 6, wherein determining the vehicle requirement of the auto-driving vehicle in response to determining that the auto-driving vehicle needs the vehicle service comprises:
determining, by the vehicle coordination device, the vehicle requirement of the auto-driving vehicle according to vehicle-related parameters of the auto-driving vehicle.

9. The method for the auto-driving vehicle service according to claim 6, wherein determining, by the vehicle coordination device, the target hub service district according to the vehicle requirement of the auto-driving vehicle comprises:
determining, by the vehicle coordination device, the target hub service district according to the vehicle requirement of the auto-driving vehicle and a service district resource of at least one hub service district.

10. The method for the auto-driving vehicle service according to claim 9, wherein the service district resource of the hub service district comprises one or more of the following:
a vehicle service item provided by the hub service district;
a time of a vehicle service provided by the hub service district; or
an expense standard of a vehicle service provided by the hub service district.

11. The method for the auto-driving vehicle service according to claim 9, wherein determining, by the vehicle coordination device, the target hub service district according to the vehicle requirement of the auto-driving vehicle and the service district resource of at least one hub service district comprises:
obtaining, by the vehicle coordination device, the service district resource of a corresponding hub service district sent by a hub coordination device of at least one hub service district;
matching, by the vehicle coordination device, the vehicle requirement of the auto-driving vehicle with the service district resource of the at least one hub service district, and determining that the auto-driving vehicle is matched with the corresponding hub service district in response to the vehicle requirement of the auto-driving vehicle being at least partially matched with the service district resource of at least one hub service district;
sending, by the vehicle coordination device, a reservation request to the hub coordination device in the hub service district matched with the auto-driving vehicle, wherein the reservation request comprises the vehicle requirement of the auto-driving vehicle, so that the corresponding hub coordination device determines whether to agree to provide a vehicle service for the auto-driving vehicle or not by the hub service district corresponding thereto according to the vehicle requirement of the auto-driving vehicle; and
determining, by the vehicle coordination device, the target hub service district from hub service districts corresponding to the hub coordination devices returning an agreement message according to a predetermined standard.

12. The method for the auto-driving vehicle service according to claim 6, wherein determining, by the vehicle coordination device, the target hub service district according to the vehicle requirement of the auto-driving vehicle comprises:
broadcasting, by the vehicle coordination device, the vehicle requirement of the auto-driving vehicle, so as to enable the hub coordination device to receive the vehicle requirement of the auto-driving vehicle and determine whether the hub service district corresponding thereto is matched with the auto-driving vehicle according to the vehicle requirement of the auto-driving vehicle and the service district resource of the hub service district corresponding to the hub coordination device;
receiving, by the vehicle coordination device, a matching result returned by at least one hub coordination device, wherein the matching result comprises information whether the hub service district corresponding to the corresponding hub coordination device is matched with the auto-driving vehicle or not;
determining, by the vehicle coordination device, at least one hub service district matched with the auto-driving vehicle according to the matching result returned by the at least one hub coordination device; and
determining, by the vehicle coordination device, the target hub service district from the at least one hub service district matched with the auto-driving vehicle according to a predetermined standard.

13. The method for the auto-driving vehicle service according to claim 6, wherein the vehicle service list comprises one or more of the following:
an actual vehicle service item;
an execution sequence of the actual vehicle service items;
an authentication mode corresponding to the actual vehicle service item;
a vehicle service place; or
a vehicle service fee.

14. The method for the auto-driving vehicle service according to claim 13, wherein communicating, by the vehicle coordination device, with the hub coordination device in the target hub service district to determine the vehicle service list comprises:
obtaining, by the vehicle coordination device, all vehicle service items provided by the target hub service district sent by the hub coordination device in the target hub service district; and
determining, by the vehicle coordination device, an intersection set of all vehicle service items desired by the auto-driving vehicle and the all vehicle service items provided by the target hub service district as the actual vehicle service item.

15. The method for the auto-driving vehicle service according to claim 14, wherein communicating, by the vehicle coordination device, with the hub coordination device in the target hub service district to determine the vehicle service list further comprises:
determining, by the vehicle coordination device, the all vehicle service items desired by the auto-driving vehicle; or
determining, by the vehicle coordination device, a first batch of vehicle service items desired by the auto-driving vehicle, obtaining a second batch of vehicle service items desired by the auto-driving vehicle and sent by the hub coordination device in the target hub service district, and determining a union set of the first batch of vehicle service items and the second batch of vehicle service items desired by the auto-driving vehicle as the all vehicle service items desired by the auto-driving vehicle.

16. The method for the auto-driving vehicle service according to claim 13, wherein communicating, by the vehicle coordination device, with the hub coordination device in the target hub service district to determine the vehicle service list comprises:
determining, by the vehicle coordination device, a position of the target hub service district and determining the position of the target hub service district as the vehicle service place in response to determining that the actual vehicle service item does not include a road rescue-related item;
determining, by the vehicle coordination device, a position of the auto-driving vehicle in response to determining that the actual vehicle service item includes a road rescue-related item; or
determining, by the vehicle coordination device, a rescue place according to the position of the auto-driving vehicle and/or the position of the target hub service district, and determining the rescue place as the vehicle service place.

17. The method for the auto-driving vehicle service according to claim 13, wherein the vehicle service list comprises the vehicle service place and the actual vehicle service item, and the vehicle service place is a position of the target hub service district; and
then, controlling, by the vehicle coordination device, the auto-driving vehicle to interact with the entity in the target hub service district according to the vehicle service list comprises:
controlling, by the vehicle coordination device, the auto-driving vehicle to travel into the target hub service district according to the position of the target hub service district comprised in the vehicle service list;
controlling, by the vehicle coordination device, the auto-driving vehicle to travel to service stations corresponding to all actual vehicle service items in the target hub service district according to the all actual vehicle service items comprised in the vehicle service list; and
controlling, by the vehicle coordination device, the auto-driving vehicle to interact with the entity of the service station to complete the all actual vehicle service items.

18. The method for the auto-driving vehicle service according to claim 17, wherein controlling, by the vehicle coordination device, the auto-driving vehicle to travel to the service stations corresponding to all actual vehicle service items in the target hub service district comprises:
determining, by the vehicle coordination device, a traveling route of the auto-driving vehicle in the target hub service district; and
controlling, by the vehicle coordination device, the auto-driving vehicle to travel to the service stations corresponding to the all actual vehicle service items in the target hub service district according to the traveling route.

19. The method for an auto-driving vehicle service according to claim 18, wherein the vehicle service list further comprises the execution sequence of the actual vehicle service items, and then determining, by the vehicle coordination device, the traveling route of the auto-driving vehicle in the target hub service district comprises:
determining, by the vehicle coordination device, a sequence of the auto-driving vehicle arriving at the service stations corresponding to the all actual vehicle service items according to the execution sequence of the all actual vehicle service items comprised in the vehicle service list; and
determining, by the vehicle coordination device, the traveling route of the auto-driving vehicle in the target hub service district according to the sequence of the auto-driving vehicle arriving at service stations corresponding to the all actual vehicle service items and the positions of the service stations.

20. The method for the auto-driving vehicle service according to claim 18, wherein determining, by the vehicle coordination device, the traveling route of the auto-driving vehicle in the target hub service district comprises:
receiving, by the vehicle coordination device, the traveling route of the auto-driving vehicle in the target hub service district sent by the hub coordination device in the target hub service district, wherein the traveling route is determined by the corresponding hub coordination device according to the execution sequence of the all actual vehicle service items comprised in the vehicle service list and the positions of the service stations corresponding to the all actual vehicle service items.

21. The method for the auto-driving vehicle service according to claim 13, wherein the vehicle service list comprises the vehicle service place and the actual vehicle service item, and the vehicle service place is a rescue place; and
then, controlling, by the vehicle coordination device, the auto-driving vehicle to interact with the entity in the target hub service district according to the vehicle service list comprises:
determining, by the vehicle coordination device, the rescue place according to the vehicle service place comprised in the vehicle service list; and
controlling, by the vehicle coordination device, the auto-driving vehicle to interact with the entity reaching the rescue place to complete the all actual vehicle service items comprised in the vehicle service list in response to determining that the entity in the target hub service district having arrived at the rescue place.

22. The method for the auto-driving vehicle service according to claim 13, wherein the vehicle service list comprises the authentication mode of the actual vehicle service item; and
then, controlling, by the vehicle coordination device, the auto-driving vehicle to interact with the entity in the target hub service district according to the vehicle service list comprises:
controlling, by the vehicle coordination device, mutual authentication of the auto-driving vehicle and the entity in the target hub service district according to the authentication mode of each actual vehicle service item in the vehicle service list, and interacting with the auto-driving vehicle to complete the corresponding actual vehicle service item after the authentication is successful.

23. The method for an auto-driving vehicle service according to claim 13, wherein the vehicle service list comprises the vehicle service fee; and
then, controlling, by the vehicle coordination device, the auto-driving vehicle to interact with the entity in the target hub service district according to the vehicle service list comprises:
controlling, by the vehicle coordination device, the auto-driving vehicle to pay for the entity in the target hub service district according to the vehicle service fee comprised in the vehicle service list.

24. The method for the auto-driving vehicle service according to claim 1, wherein controlling, by the vehicle coordination device, the auto-driving vehicle to interact with the entity in the hub service district according to the vehicle service scheme comprises:
logging, by the vehicle coordination device, a process of the auto-driving vehicle interacting with the entity in the target hub service district.

25. A method for an auto-driving vehicle service applied to a hub coordination device configured in a hub service district, comprising:
communicating, by the hub coordination device, with a vehicle coordination device configured in an auto-driving vehicle needing a vehicle service to determine a vehicle service scheme; and
controlling, by the hub coordination device, an entity in the hub service district to interact with the auto-driving vehicle according to the vehicle service scheme.

26. The method for the auto-driving vehicle service according to claim 25, wherein communicating, by the hub coordination device, with the vehicle coordination device configured in the auto-driving vehicle needing the vehicle service to determine the vehicle service scheme comprises:
communicating, by the hub coordination device, with the vehicle coordination device to determine a target hub service district and a vehicle service list.

27. The method for the auto-driving vehicle service according to claim 26, wherein communicating, by the hub coordination device, with the vehicle coordination device to determine the target hub service district and the vehicle service list comprises:
communicating, by the hub coordination device, with the vehicle coordination device to determine the target hub service district; and
communicating, by the hub coordination device, with the vehicle coordination device to determine the vehicle service list in response to determining the hub service district corresponding thereto as the target hub service district; and
then, controlling, by the hub coordination device, the entity in the hub service district to interact with the auto-driving vehicle according to the vehicle service scheme comprises:
controlling, by the hub coordination device, the entity in the target hub service district to interact with the auto-driving vehicle according to the vehicle service list.

28. The method for the auto-driving vehicle service according to claim 27, wherein communicating, by the hub coordination device, with the vehicle coordination device to determine the target hub service district comprises:
determining, by the hub coordination device, the target hub service district according to a service district resource of the hub service district corresponding to the hub coordination device and a vehicle requirement of the auto-driving vehicle.

29. The method for the auto-driving vehicle service according to claim 28, wherein the service district resource of the hub service district comprises one or more of the following:
a vehicle service item provided by the hub service district;
a time of a vehicle service provided by the hub service district; or
an expense standard of a vehicle service provided by the hub service district.

30. The method for the auto-driving vehicle service according to claim 28, wherein the vehicle requirement of the auto-driving vehicle comprises one or more of the following:
a desired vehicle service item for the auto-driving vehicle;
a desired vehicle service time for the auto-driving vehicle; or
a desired vehicle service place for the auto-driving vehicle.

31. The method for the auto-driving vehicle service according to claim 28, wherein determining, by the hub coordination device, the target hub service district according to the service district resource of a hub service district corresponding to the hub coordination device and the vehicle requirement of the auto-driving vehicle comprises:
sending, by the hub coordination device, the service district resource of the hub service district corresponding to the hub coordination device to the vehicle coordination device, so as to enable the vehicle coordination device to determine whether the hub service district corresponding to the hub coordination device is matched with the auto-driving vehicle or not according to the requirement of the auto-driving vehicle and the service district resource;
determining, by the hub coordination device, whether to agree to provide the vehicle service for the auto-driving vehicle or not by the hub service district corresponding to the hub coordination device according to the requirement of the auto-driving vehicle comprised in a reservation request in response to receiving the reservation request sent by the vehicle coordination device, wherein the reservation request is sent when the vehicle coordination device determines that the hub service district corresponding to the hub coordination device is a hub service district matched with the auto-driving vehicle; and
returning, by the hub coordination device, an agreement message to the vehicle coordination device in response to agreeing to provide the vehicle service for the auto-driving vehicle by the hub service district corresponding to the hub coordination device, so as to enable the vehicle coordination device to determine the hub service district corresponding to the hub coordination device as the target hub service district.

32. The method for the auto-driving vehicle service according to claim 28, wherein determining, by the hub coordination device, the target hub service district according to the service district resource of the hub service district corresponding to the hub coordination device and the vehicle requirement of the auto-driving vehicle comprises:
receiving, by the hub coordination device, the vehicle requirement of the auto-driving vehicle broadcasted by the vehicle coordination device;
determining, by the hub coordination device, whether the hub service district corresponding thereto is matched with the auto-driving vehicle according to the service district resource of the hub service district corresponding to the hub coordination device and the vehicle requirement of the auto-driving vehicle, and returning the matching result to the vehicle coordination device, so as to enable the vehicle coordination device to determine the target hub service district from at least one hub service district matched with the auto-driving vehicle according to a predetermined standard; and
determining, by the hub coordination device, the hub service district corresponding the hub coordination device as the target hub service district in response to receiving a notification message sent by the vehicle coordination device.

33. The method for the auto-driving vehicle service according to claim 27, wherein the vehicle service list comprises one or more of the following:
an actual vehicle service item;
an execution sequence of the actual vehicle service items;
an authentication mode corresponding to the actual vehicle service item;
a vehicle service place; or
a vehicle service fee.

34. The method for the auto-driving vehicle service according to claim 33, wherein communicating with the vehicle coordination device to determine the vehicle service list in response to determining the hub service district corresponding thereto as the target hub service district comprises:
obtaining, by the hub coordination device, a second batch of vehicle service items desired by the auto-driving vehicle and sending the second batch of vehicle service items desired by the auto-driving vehicle to the vehicle coordination device, so as to enable the vehicle coordination device to determine a union set of a first batch of vehicle service items desired by the auto-driving vehicle and the second batch of vehicle service items determined by the vehicle coordination device as all vehicle service items desired by the auto-driving vehicle; and
sending, by the hub coordination device, all vehicle service items provided by the target hub service district to the vehicle coordination device, so as to enable the vehicle coordination device to determine an intersection set of the all vehicle service items desired by the auto-driving vehicle and the all vehicle service items provided by the target hub service district as the actual vehicle service item.

35. The method for the auto-driving vehicle service according to claim 33, wherein communicating with the vehicle coordination device to determine the vehicle service list in response to determining the hub service district corresponding thereto as the target hub service district comprises:
receiving, by the hub coordination device, a first batch of vehicle service items desired by the auto-driving vehicle sent by the vehicle coordination device;
determining, by the hub coordination device, a union set of an obtained second batch of vehicle service items desired by the auto-driving vehicle and a first batch of vehicle service items desired by the auto-driving vehicle as all vehicle service items desired by the auto-driving vehicle; and
determining, by the hub coordination device, an intersection set of the all vehicle service items desired by the auto-driving vehicle and all vehicle service items provided by the target hub service district as the actual vehicle service items.

36. The method for the auto-driving vehicle service according to claim 33, wherein communicating with the vehicle coordination device to determine the vehicle service list in response to determining the hub service district corresponding thereto as the target hub service district comprises:
determining, by the hub coordination device, the execution sequence of actual vehicle service items according to one or more of positions of service stations corresponding to all actual vehicle service items in the target hub service district, a dependency relationship of different actual vehicle service items and service district-related parameters of the target hub service district.

37. The method for the auto-driving vehicle service according to claim 33, wherein communicating with the vehicle coordination device to determine the vehicle service list in response to determining the hub service district corresponding thereto as the target hub service district comprises:
determining, by the hub coordination device, the authentication mode of each actual vehicle service item according to authentication modes adopted by entities for execution of all actual vehicle service items in the target hub service district.

38. The method for the auto-driving vehicle service according to claim 33, wherein communicating with the vehicle coordination device to determine the vehicle service list in response to determining the hub service district corresponding thereto as the target hub service district comprises:
determining, by the hub coordination device, the time for providing the vehicle service for the auto-driving vehicle by the hub service district corresponding to the hub coordination device according to service district-related parameters of the target hub service district.

39. The method for the auto-driving vehicle service according to claim 33, wherein communicating with the vehicle coordination device to determine the vehicle service list in response to determining the hub service district corresponding thereto as the target hub service district comprises:
determining, by the hub coordination device, the expense standard of each actual vehicle service item, and calculating a vehicle service fee of each actual vehicle service item and/or total vehicle service fees of all actual vehicle service items according to the expense standard.

40. The method for the auto-driving vehicle service according to claim 33, wherein communicating with the vehicle coordination device to determine the vehicle service list in response to determining the hub service district corresponding thereto as the target hub service district comprises:
determining, by the hub coordination device, an address of the hub service district as the vehicle service place in response to determining that the actual vehicle service item is not a road rescue-related item; and
communicating, by the hub coordination device, with the vehicle coordination device to determine the rescue place and determines the rescue place as the vehicle service place in response to determining that the actual vehicle service item is the road rescue-related item.

41. The method for the auto-driving vehicle service according to claim 33, wherein the vehicle service list comprises the vehicle service place and the actual vehicle service item, and the vehicle service place is a position of the target hub service district; and then controlling, by the hub coordination device, the entity in the target hub service district to interact with the auto-driving vehicle according to the vehicle service list comprises:
determining, by the hub coordination device, the service stations in the target hub service district corresponding to all actual vehicle service items comprised in the vehicle service list; and
controlling, by the hub coordination device, the entity in the corresponding service station to interact with the auto-driving vehicle to complete the all actual vehicle service items in response to determining that the auto-driving vehicle arriving at the service stations in the target hub service district corresponding to the all actual vehicle service items.

42. The method for the auto-driving vehicle service according to claim 33, wherein the vehicle service list further comprises the execution sequence of actual vehicle service items, and then controlling, by the hub coordination device, the entity in the target hub service district to interact with the auto-driving vehicle according to the vehicle service list further comprises:
determining, by the hub coordination device, a traveling route according to the execution sequence of the all actual vehicle service items comprised in the vehicle service list and the positions of service stations corresponding to the all actual vehicle service items; and
sending, by the hub coordination device, the traveling route to the auto-driving vehicle, so as to enable the auto-driving vehicle to travel in the target hub service district according to the traveling route.

43. The method for the auto-driving vehicle service according to claim 33, wherein the vehicle service list comprises the vehicle service place and the actual vehicle service item, and the vehicle service place is a rescue place, and then controlling, by the hub coordination device, the entity in the target hub service district to interact with the auto-driving vehicle according to the vehicle service list comprises:
determining, by the hub coordination device, the rescue place according to the vehicle service place comprised in the vehicle service list;
determining, by the hub coordination device, one or more entities for providing all actual vehicle service items according to the all actual vehicle service items comprised in the vehicle service list; and
dispatching, by the hub coordination device, the one or more entities to the rescue place, and controlling the one or more entities to interact with the auto-driving vehicle to complete the all actual vehicle service items after the one or more entities arrive at the rescue place.

44. The method for the auto-driving vehicle service according to claim 33, wherein the vehicle service list comprises the authentication mode of the actual vehicle service item, and then controlling, by the hub coordination device, the entity in the target hub service district to interact with the auto-driving vehicle according to the vehicle service list comprises:
controlling, by the hub coordination device, mutual authentication of the entity in the target hub service district and the auto-driving vehicle according to the authentication mode of each actual vehicle service item in the vehicle service list, and interacting with the auto-driving vehicle to complete the corresponding actual vehicle service item after the authentication is successful.

45. The method for the auto-driving vehicle service according to claim 33, wherein the vehicle service list further comprises the vehicle service fee, and then controlling, by the hub coordination device, the entity in the target hub service district to interact with the auto-driving vehicle according to the vehicle service list comprises:
determining, by the hub coordination device, whether a fee paid by the auto-driving vehicle to the entity in the target hub service district is consistent with the vehicle service fee comprised in the vehicle service list or not, and sending a message containing an additional fee or a refunding fee to the vehicle coordination device in response to the fee paid by the auto-driving vehicle to the entity in the target hub service district being inconsistent with the vehicle service fee comprised in the vehicle service list.

46. The method for the auto-driving vehicle service according to claim 25, wherein controlling, by the hub coordination device, the entity in the hub service district to interact with the auto-driving vehicle according to the vehicle service scheme comprises:
logging, by the hub coordination device, a process of the entity in the target hub service district interacting with the auto-driving vehicle.

47. A vehicle coordination device, comprising: a processor, a memory and a computer program stored on the memory and executable on the processor, wherein the processor, when executing the computer program, executes a method according to any one of claims 1-24.

48. An auto-driving vehicle, comprising: a vehicle coordination device;
wherein the vehicle coordination device is configured for: communicating with a hub coordination device configured in a hub service district to determine a vehicle service scheme in response to determining that the auto-driving vehicle needs a vehicle service; and controlling the auto-driving vehicle to interact with an entity in the hub service district according to the vehicle service scheme.

49. A computer-readable storage medium having a computer program stored thereon, wherein the computer program, when executed by a processor, implements a method according to any one of claims 1-24.

50. A hub coordination device, comprising: a processor, a memory and a computer program stored on the memory and executable on the processor, wherein the processor, when executing the computer program, executes a method according to any one of claims 25-46.

51. A hub service district, comprising: a hub coordination device and an entity; wherein the hub coordination device is configured for: communicating with a vehicle coordination device configured in an auto-driving vehicle to determine a vehicle service scheme; and controlling the entity in the hub service district to interact with the auto-driving vehicle according to the vehicle service scheme.

52. A computer-readable storage medium having a computer program stored thereon, wherein the computer program, when executed by a processor, implements a method according to any one of claims 25-46.

53. A system for an auto-driving vehicle service, comprising: a vehicle coordination device configured in the auto-driving vehicle and a hub coordination device configured in a hub service district;
wherein the vehicle coordination device is configured for: communicating with the hub coordination device configured in the hub service district to determine a vehicle service scheme in response to determining that the auto-driving vehicle needs a vehicle service; and controlling the auto-driving vehicle to interact with an entity in the hub service district according to the vehicle service scheme; and
the hub coordination device is configured for: communicating with the vehicle coordination device to determine the vehicle service scheme; and controlling the entity in the hub service district to interact with the auto-driving vehicle according to the vehicle service scheme.

54. A vehicle service system, comprising: an auto-driving vehicle and a hub service district; wherein the auto-driving vehicle comprises a vehicle coordination device; and the hub service district comprises a hub coordination device and an entity;
communicating, by the vehicle coordination device, with the hub coordination device to determine a vehicle service scheme when the auto-driving vehicle needs a vehicle service;
controlling, by the vehicle coordination device, the auto-driving vehicle to interact with the entity in the hub service district according to the vehicle service scheme; and
controlling, by the hub coordination device, the entity in the hub service district to interact with the auto-driving vehicle according to the vehicle service scheme.
